# EUROPEAN PATENT APPLICATION

(11) **EP 4 769 149 A1**
(43) Date of publication of application: **01.07.2026**
(21) Application number: 25225167.3
(22) Date of filing: 18.12.2025
(51) Int. Cl.: G06F 11/07, G06F 11/34

(54) **FRAMEWORK FOR END-TO-END ASSURANCE FOR APPLICATION WORKLOADS**

(30) Priority: 31.12.2024 US 202419007155
(71) Applicant: Juniper Networks, Inc., Sunnyvale, CA 94089-1206 (US)
(72) Inventor: Banka, Tarun, Sunnyvale, 94089 (US); Gupta, Rahul, Sunnyvale, 94089 (US); Henkel, Michael, Sunnyvale, 94089 (US); Sridhar, Thayumanavan, Sunnyvale, 94089 (US); Li, Andrew Victor, Sunnyvale, 94089 (US); Dharmaraj, Mithun Chakaravarrti, Sunnyvale, 94089 (US); Gupta, Jit, Sunnyvale, 94089 (US); Yavatkar, Raj, Sunnyvale, 94089 (US); Cohen, Ariel, Sunnyvale, 94089 (US)
(74) Representative: D Young & Co LLP

(57) **Abstract**

Techniques are disclosed for end-to-end assurance of application workloads. For example, a computing system receive time series data comprising performance indicators for elements of layers of a system having host computing devices executing application workloads. The computing system creates, based on mapping, using the time series data, Graphics Processing Units (GPUs) of a compute layer to network devices of a network layer, a dependency graph representing cross-layer relationships between elements of different layers of the layers. The computing system determines an anomaly in the performance of one of the application workloads. The computing system determines, based on a dependency within the dependency graph of the application workload on an element of the network layer, an issue with the element as a root cause of the anomaly in the performance of the workload, and performs a remedial action for the issue with the element of the network layer.

## Description

This application claims the benefit of US Patent Application No. 19/007,155, filed 31 December 2024, the entire contents of which is incorporated herein by reference.

### TECHNICAL FIELD

This disclosure generally relates to computer networks, and more particularly, to root cause analysis in a network system.

### BACKGROUND

A computer network is a collection of interconnected computing devices that can exchange data and share resources. A variety of devices operate to facilitate communication between the computing devices. For example, a computer network may include routers, switches, gateways, firewalls, and a variety of other devices to provide and facilitate network communication. In some cases, a computer network may be implemented in a data center having hundreds or even thousands of network devices that are part of the network.

A network management system (NMS) enables administrators to monitor, configure, and manage network devices servers. The interaction between the NMS and the network to configure it ensures the network is set up according to the desired configuration, operates correctly, and can be maintained efficiently. After discovering devices and establishing communication, the NMS can perform network configuration tasks. These tasks are executed based on the network administrator's policies, rules, or specific commands. Configuration tasks may include device configuration, which involves applying configuration files or templates to routers, switches, firewalls, etc., and may include setting IP addresses, VLANs, access control lists (ACLs), routing protocols, or other device-specific settings. Configuration tasks may also include configuring network policies, such as quality of service (QoS), traffic prioritization, security rules, and firewall policies. Configuration tasks may also include setting up services such as DHCP, DNS, network time protocol (NTP), and load balancers.

The NMS may also engage in monitoring and telemetry collection, whereby the NMS monitors the state of the network after configuration to ensure that devices remain healthy and function as expected. Telemetry data may include data relating to device health (e.g., CPU usage, memory utilization, temperature), network traffic statistics (e.g., bandwidth usage, packet drops, error rates), and link status (e.g., up/down state of interfaces, port errors), for instance. As part of network monitoring, the NMS may also perform configuration validation to ensure that the actual configuration state of a network aligns with intended configuration state of the network. If the NMS detects any discrepancies or configuration, the NMS can take action to align the actual configuration state of the network with intended configuration state of the network.

The NMS may also interact with the network by monitoring for events and generating alerts based on pre-defined thresholds or conditions. For example, if a link goes down, traffic exceeds a certain limit, or a device is nearing its resource capacity, the NMS can trigger alerts to network administrators. Such events are alternately referred to herein as "anomalies". The NMS may in some cases automatically perform predefined actions when certain alerts are triggered, such as rerouting traffic or adjusting QoS settings.

### SUMMARY

Particular aspects are set out in the appended independent claims. Various optional embodiments are set out in the dependent claims. In general, the disclosure describes techniques for end-to-end assurance of application workloads. In an example of the techniques of the disclosure, a system executes application workloads for an application distributed across a plurality of host computing devices. The system includes a plurality of layers, such as an application layer upon which the application workloads execute, a compute layer including compute nodes, GPUs, and CPUs that execute the application workloads, and a network layer including Network Interface Controllers (NICs) for the compute nodes, switches, and routers that forward network traffic for the application workloads. An analysis system receives time series data generated by devices of the system and comprising performance indicators for elements of the plurality of different layers of the system that support the application.

The analysis system creates, based on the time series data, a dependency graph for each application type executed by the system, the dependency graph comprising nodes and edges. The nodes represent the elements residing at the plurality of layers, and the edges represent cross-layer relationships between pairs of the elements, each of the elements of each pair residing at different layers of the plurality of layers. For example, the analysis system may map, using the time series data, Graphics Processing Units (GPUs) of a compute layer of the plurality of layers to network devices of a network layer of the plurality of layers, and create the dependency graph based on the mappings between GPUs of the compute layer and the network devices of the network layer. The analysis system determines, based on the time series data and optionally on a machine learning (ML) model trained with previous time series data, an anomaly in the performance of the application.

The analysis system determines, based on a mapping between the application and an element of the dependency graph, an issue with the element as a root cause of the anomaly. For example, the analysis system may map each application to the host computing devices (e.g., servers) and corresponding GPUs which are utilized by application workloads for the application during its runtime. For example, the analysis system may determine, e.g., based on a dependency of the application workload on an element of the network layer within the dependency graph, an issue with the element of the network layer as a root cause of the anomaly in the performance of the application workload. The analysis system outputs an indication of the issue with the element as the root cause of the anomaly in the application performance.

In some examples, the analysis system performs a remedial action for the root cause of the anomaly. In some examples, to perform the remedial action, the analysis system configures an end-to-end path of communication between Graphics Processing Units (GPUs) of two host computing devices within a compute layer. In some examples, to perform the remedial action, the analysis system configures a congestion control scheme of a network device within the network layer that carries network traffic associated with the application.

In some examples, the analysis system determines a health of the elements residing at the plurality of layers based on the time series data and the dependency graph and outputs an indication of the health of the elements. In some examples, the analysis system determines an end-to-end path of communication between two Graphics Processing Unit (GPUs) of a host computing device within a compute layer based on the time series data and the dependency graph, and outputs a representation of the end-to-end path for display at a display device.

The techniques of the disclosure may provide specific improvements to the computer-related field of computer networking management, orchestration, and root cause analysis that may have one or more practical applications. For example, the techniques of the disclosure may enable an administrator to diagnose and remediate anomalies in behavior of applications that are caused by issues in underlying elements of the system executing the application workloads, such as insufficient resources within a network layer or compute layer of the system. In addition, the techniques of the disclosure may enable such a system to perform automatic remediation of such issues in underlying elements, such that a system implementing the techniques of the disclosure may improve network throughput, reduce network congestion, and ensure compliance of an application with expected behavior and Service-level Expectations (SLEs) over conventional systems. In addition, the techniques of the disclosure may enable the visualization of network traffic for a particular application workload amongst and between individual GPUs across the network system, so as to improve troubleshooting, diagnosis, and understanding of application behavior and anomalies.

In one example, this disclosure describes a computing system comprising: storage media; and processing circuitry in communication with the storage media, the processing circuitry configured to: receive time series data comprising performance indicators for elements of a plurality of layers of a system having host computing devices that execute workloads for an application, the time series data generated by the elements; create, based on mapping, using the time series data, Graphics Processing Units (GPUs) of a compute layer of the plurality of layers to network devices of a network layer of the plurality of layers, a dependency graph comprising nodes and edges, the nodes representing the elements of the plurality of layers, and the edges representing cross-layer relationships between pairs of the elements, each of the elements of each pair being of different layers of the plurality of layers; determine, based on the time series data, an anomaly in the performance of a workload of the workloads for the application; determine, based on a dependency of the workload on an element of the network layer within the dependency graph, an issue with the element of the network layer as a root cause of the anomaly in the performance of the workload; and perform a remedial action for the issue with the element of the network layer as a root cause of the anomaly in the performance of the workload.

In another example, this disclosure describes a method comprising: receiving, by processing circuitry of a computing system, time series data comprising performance indicators for elements of a plurality of layers of a system having host computing devices that execute workloads for an application, the time series data generated by the elements; create, based on mapping, using the time series data, Graphics Processing Units (GPUs) of a compute layer of the plurality of layers to network devices of a network layer of the plurality of layers, a dependency graph comprising nodes and edges, the nodes representing the elements of the plurality of layers, and the edges representing cross-layer relationships between pairs of the elements, each of the elements of each pair being of different layers of the plurality of layers; determining, by the processing circuitry and based on the time series data, an anomaly in the performance of a workload of the workloads for the application; determining, by the processing circuitry and based on a dependency of the workload on an element of the network layer within the dependency graph, an issue with the element of the network layer as a root cause of the anomaly in the performance of the workload; and performing, by the processing circuitry, a remedial action for the issue with the element of the network layer as a root cause of the anomaly in the performance of the workload.

In another example, this disclosure describes computer-readable media encoding instructions that, when executed, are configured to cause processing circuitry to: receive time series data comprising performance indicators for elements of a plurality of layers of a system having host computing devices that execute workloads for an application, the time series data generated by the elements; create, based on mapping, using the time series data, Graphics Processing Units (GPUs) of a compute layer of the plurality of layers to network devices of a network layer of the plurality of layers, a dependency graph comprising nodes and edges, the nodes representing the elements of the plurality of layers, and the edges representing cross-layer relationships between pairs of the elements, each of the elements of each pair being of different layers of the plurality of layers; determine, based on the time series data, an anomaly in the performance of a workload of the workloads for the application; determine, based on a dependency of the workload on an element of the network layer within the dependency graph, an issue with the element of the network layer as a root cause of the anomaly in the performance of the workload; and perform a remedial action for the issue with the element of the network layer as a root cause of the anomaly in the performance of the workload.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1 is a block diagram illustrating an example of a network that is managed using a network management system and analysis system, in accordance with techniques of this disclosure.
FIG. 2 is a block diagram illustrating an analysis system and an example set of components for network management system of FIG. 1, in accordance with techniques of this disclosure.
FIG. 3 is a block diagram illustrating an example system in accordance with the techniques of the disclosure.
FIG. 4 is a block diagram illustrating an example traffic path determined in accordance with the techniques of the disclosure.
FIG. 5 is a flowchart illustrating an example operation in accordance with techniques of this disclosure.
FIG. 6 is a block diagram illustrating an example computing device in accordance with the techniques of the disclosure.

Like reference characters refer to like elements throughout the figures and description.

### DETAILED DESCRIPTION

Intent-based networking is a software-enabled automation process that uses high levels of intelligence, analytics, and orchestration to improve network operations and uptime. When operators describe the business outcomes they wish to accomplish, the network management system converts those objectives into the configuration necessary to achieve them, without individual tasks having to be coded and executed manually.

For example, consider the need for secure communications between two networks. An intent would broadly state that a secure tunnel is needed between Network A and Network B. An operator would identify which traffic should use the tunnel and describe any other desired general properties of the tunnel. But the operator would not necessarily specify how the tunnel is to be implemented, such as the number of devices to be used, how BGP advertisements should be made, or which specific features and parameters to turn on. Instead, an intent-based networking system may automatically generate a full configuration of all devices based on the service description. The intent-based networking system may then provide ongoing assurance checks between the intended and operational state of the network, using closed-loop validation to continuously verify the correctness of the configuration.

Intent-based networking is a declarative network operation model. It contrasts with traditional imperative networking, which requires network engineers to specify the sequence of actions needed on individual network elements and creates significant potential for error. Traditionally, networking has been driven by manual, command-line interface (CLI)-based operations, basic element management systems (EMSs), or automation scripts. Most network outages result from human errors that occur during these network operations. Intent-based networking (IBN) reduces errors and risk while improving operational efficiencies in a number of ways. For example, IBN validates intent objects before applying them to the network. Intent objects are high-level representations of the desired properties or outcomes to be achieved with the network. Validation is syntactic and includes semantic checks against networkwide policy. IBN facilitates rapid roll-back or roll-forward. Operators simply apply the appropriate versioned intent object to return to a known good state if something goes wrong during a deployment push. IBN limits the impact and scope of failures during new intent rollout through well-defined policies. IBN may enable intent-based fallback. As the system knows the desired outcomes for a specific configuration, it can maintain those outcomes even in the face of outages or device errors by reconfiguring other network elements or using different mechanisms to achieve the same results.

Modern network orchestration systems have made intent-based network systems for mission-critical and scaled deployments possible. Intent-based networks dramatically reduce the time to deliver reliable services from days or weeks to minutes and help address operational challenges once the infrastructure has been deployed. Intent-based networking may also involve intent assurance. With intent-based analytics, networks remain in compliance with the original intent for the network throughout the service lifecycle. Intent-based analytics provide insights into network services, enabling teams to think about the network as a complete service. Using analytics, intent-based networking may enable faster root-cause analysis (RCA) and identification.

### Machine Learning workloads and other highly-parallelized workloads

Modern day machine learning workloads are no longer confined to a handful of high-performance systems. Training these billion parameter Generative AI models (e.g. OpenAI's GPT3/4, Meta's Llama, Google's BERT, etc.) are now carried out on-premises, spanning hundreds of systems, with each of them comprising multiple Graphical Processing Units (GPUs). To provide end-to-end (E2E) assurance to these workloads, observability into the major components in the end-to-end path becomes crucial. In accordance with the techniques of the disclosure, a system is described for a comprehensive SaaS based solution that is geared for AI/ML workloads on-prem, by focusing on multiple layers in the E2E path. Leveraging existing and enhanced telemetry/log data from these layers, the disclosure aims to serve cross-layer visibility use cases such as- Anomaly, Detection, Root Cause Analysis, Service Level Expectation Monitoring and Application Collective Communication Profiling. To achieve the cross-layer observability goal of the present disclosure, the disclosure first proposes changes to the logging functionality of Collective Communication Libraries such as NCCL, to provide insights into the communication patterns between GPUs for different AI/ML workloads. New custom AI/ML app metrics (e.g. accuracy, time to completion, etc.) module support additional visibility into the App-layer. Further visibility into the compute layer may involve monitoring the compute device, e.g. GPUs. For this case, the system described herein utilizes a widely used and open-sourced GPU Monitoring tool. Additionally, for the network layer, the system described herein leverages existing flow and network level telemetry tools, as well as transport specific system counters. Finally, the disclosure demonstrates how an instrumented version modified from existing frameworks can be utilized to profile the network impact of these AI/ML training workloads, which is essential to consolidate the importance of the network in such distributed training scenarios.

### Assurance for AI/ML Applications.

Machine Learning applications today are primarily of three types - training, finetuning and inferencing. All three types require large compute devices such as GPUs (Graphical Processing Units) for training/finetuning/inferencing process, and even then, are difficult to confine to a single system, due to their large model and dataset sizes. This results in the distribution of these applications across multiple systems with multiple GPUs. Hence, they are usually deployed in datacenters (on-prem), where the network fabric could be managed by Apstra-like solutions. Additionally, these workloads do not always exist in an isolated context. In a datacenter multiple workloads of different types may co-exist, bringing forth the need to provide assurance to these individual applications.

Assurance for the mentioned workloads means first providing visibility into the layers that comprise the workload's end-to-end path, e.g. the network fabric, GPU, etc. and identifying bottlenecks in the E2E path. Additionally, a framework is required to leverage the performance of these components and pinpoint the root cause. This framework would also include anomaly detection, monitoring service level expectation (SLE) across all layers and automated troubleshooting. Finally, it would also provide a line of action to address the root cause
(present in underlying network/GPU layers) resulting in the detected anomalies. A solution that couples the cross-layer visibility with the E2E framework could be crucial in providing assurance for these multi-node spanning AI/ML applications.

### Collective Communications.

Distributed training/finetuning/inferencing of AI/ML workloads can be carried out using a specific parallelization technique to distribute the application. The multiple parallelization techniques are:
Data Parallelization (DP): In this case a complete copy of the model is replicated on each system or GPU where each system/GPU trains the model on a different subset (batch) of the training data in parallel. After each training step (epoch or iteration), the gradients (parameter updates) are averaged across all replicas and are used to update the global model. There is another efficient version of this technique called Distributed Data Parallelism (DDP) which is more prevalent due to its improved scalability and efficiency.

Model Parallelization (MP): For this technique the model itself is distributed across systems/GPUs, instead of the data. It is partitioned into smaller pieces (layers, modules), with each piece assigned to a different system/GPU. During training, data is passed sequentially through these partitioned model pieces across different systems/GPUs. It is suitable for very large models that wouldn't fit on a single system/GPU.

Hybrid Parallelism (HP): This technique combines DP and MP for even larger models and more complex training scenarios. The data and the model are partitioned across different systems/GPUs for maximum parallelization.

Pipeline Parallelism (PP): In this case the training pipeline is broken down into stages (e.g., data loading, preprocessing, forward pass, backward pass), where different stages are executed on different systems/GPUs in a pipelined fashion, thus overlapping computation for better efficiency.

Thus, these parallelization techniques result in the workload spanning multiple GPU equipped nodes, which in turn causes communication between said nodes for different purposes, e.g. updating each node with new weight values, distributing and checkpointing models, and even P2P communication between nodes. The communication for these workloads is carried out by Collective Communication Libraries (CCLs) such as MPI and NVIDIA's NCCL, with NCCL dominating. These libraries execute specific collective operations for updating weights between GPUs.

The parallelization techniques determine which collective operations are employed, which in turn dictate the network load. Certain workloads (e.g. vision-based ML models like Resnet, Alexnet, VGG, etc.) work well enough with standalone DP due to their smaller model size while larger GenAI models employ a combination of HP and PP. Thus, the communication patterns (and hence the observed network load) vary across different workloads. This brings forth the need to profile different workloads by obtaining telemetry pertaining to these collective communication operations.

### Network Observability.

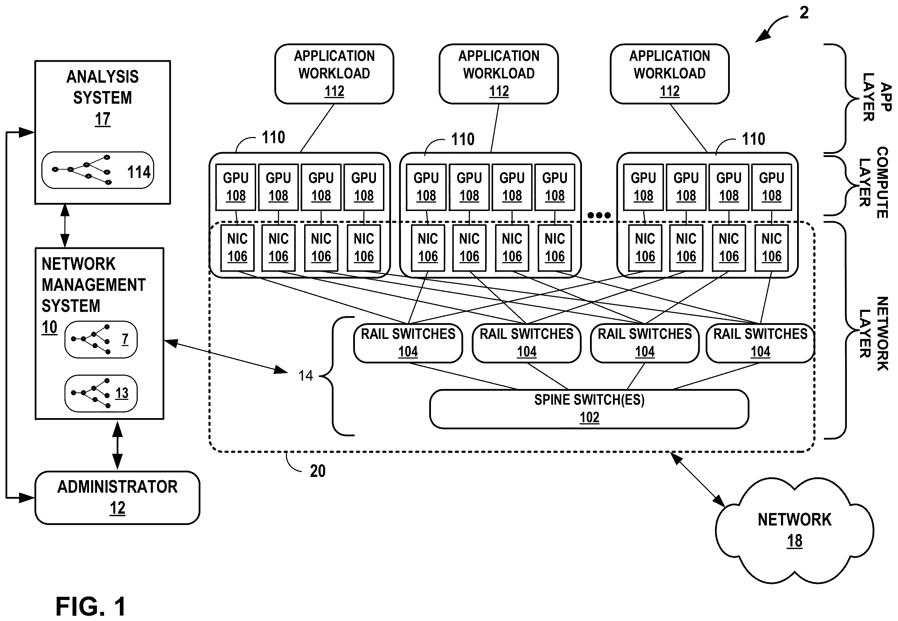

Due to the need for high-speed communications between these GPUs, the network bandwidth and latency could play a crucial role in training models that comprise billions of parameters. Supercomputers, such as NVIDIA's DGX GH200, (also known as High Bandwidth Domains or HBDs) comprise tens of fully connected GPUs that utilize protocols, such as the non-blocking compute fabric NVLink, to achieve high bandwidth and low latency for intranode communication. These nodes are connected to each other in a rail optimized topology where same rank GPUs are connected to the same rail switch (as shown in FIG. 1, below). However, internode traffic (e.g. traffic between HBDs) is slower and prone to congestion episodes. Hence, Remote Direct Memory Access (RDMA) or RDMA-based transport solutions such as Infiniband (proprietary to NVIDIA) or RoCEv2 (RDMA over Converged Ethernet) are utilized due to their low latency and high bandwidth nature. However, Infiniband's high cost may result in vendors preferring Ethernet based solutions such as RoCEv2. There are issues associated with RoCEv2 that may result in network bottlenecks, such as head-of-the-line blocking, unfairness, congestion that spreads in the network, and degrading performance under load. This brings forth the need to combine Application and CCL-based visibility with network telemetry (from both switches and NICs) to identify potential points and sources of bottleneck in the network.

### GPU Telemetry

The efficient parallel computing power of GPUs makes them the building blocks in training AI/ML models. However, proper utilization of these devices is crucial to ensure seamless training of ML models. There are multiple scenarios that make GPU monitoring a key component in providing end-to-end assurance to these workloads. Some are discussed as follows:
GPU Utilization: Low GPU utilization could be due to the application spending more time on CPU tasks or due to it spending more time in communication phases. Thus, monitoring this metric could be the first step in helping identify where the bottleneck lies.

GPU Temperature: Even though high GPU utilization is desired, a constant utilization value of 100% could lead the GPU temperature to rise, which in turn could cause thermal throttling. During thermal throttling, built-in safety mechanisms in the GPU automatically reduce performance (clock speed) when temperatures reach critical levels. This prevents permanent damage from overheating but significantly degrades the application performance.

GPU Memory Bandwidth: GPUs use dedicated memory to store data that it's actively working on. However, large datasets (which are common in Large Language Models such as GPT4, BERT and Llama) could lead to out of throughput issues, if the speed of data transfer between the GPU and memory is insufficient, thus stalling the entire training process.

Power Supply: Higher end GPUs draw significantly more power and if the power supply unit (PSU) doesn't provide enough wattage, it can hinder the GPU's performance.

Bottlenecks could arise at different components that make up the E2E path in a distributed AI/ML workload (e.g. the application itself, the collective communication library, the network, and GPUs) during the lifetime of the job. This brings forth the need for cross layer visibility to provide E2E assurance to these workloads. To do so the disclosure proposes an E2E model that utilizes telemetry and log data from the mentioned components to identify anomalies and bottlenecks and suggest troubleshooting steps to tackle the detected issues.

### A Framework for End-to-End (E2E) Assurance for Highly Parallelized Workloads.

In accordance with the techniques of the disclosure, an E2E depiction of distributed AI/ML workloads in the datacenter is described, wherein each application is mapped to the hosts and corresponding GPUs which it utilizes during its runtime. Additionally, these are further mapped to the underlying network topology (which includes NICs and switches). This gives an E2E view of individual applications in the datacenter, be it training, finetuning or inferencing. This is accomplished by utilizing telemetry and log data from multiple sources to build the E2E path.

The E2E path of an application can be broken into 3 major layers - app layer, compute layer and network layer. Metrics (derived from telemetry) from these three layers is used to provide E2E assurance. This is done by supporting multiple analytics driven use cases, such as anomaly detection, graph generation, path tracing and log analytics. The metrics from each layer can be classified as follows:
Application specific metrics - These could be metrics that determine if the application is behaving as expected, e.g. accuracy, time to completion, MSE, etc.

Collective Communication Logs - These include application-specific metrics derived from logs generated by the collective communication framework, e.g. NCCL. They can help in building the dependency graph and in tracing the communications path across time. They can provide information as to which GPU is communicating with which GPU over time, along with the bytes transferred and the type of collective operation.

GPU Metrics - Existing tools such as Nvidia's Datacenter GPU Manager (DCGM) can help to expose GPU metrics such as utilization, memory bandwidth, temperature, etc. This can help in identifying scenarios where GPU is the bottleneck.

Node Level Telemetry - A node corresponds to the host comprising multiple GPUs and NICs. Telemetry from these nodes (e.g. CPU utilization, disk info, etc.) can help determine if there are any issues associated with the host system itself, e.g. CPU or storage issues.

RoCEv2 Counters - These system level counters (e.g. RDMA NIC counters) can provide RoCE specific information to identify if RoCE-specific mechanisms such as DCQCN are causing bottlenecks in the network. They can also help in proactive measures, for e.g. switch buffer buildup could be an indicator for congestion scenarios in the near future.

Flow level and Network Telemetry - Flow level and network telemetry, which includes sampled packet information, switch interface stats, queue pair counters, etc. could help in identifying other points of bottleneck in the network. In some examples, Apstra, available from Juniper Networks, Inc., and Elastiflow, available from Elastiflow Inc., may be used as source of telemetry for the network fabric.

FIG. 1 is a block diagram illustrating an example system 2 that is managed using a network management system 10 and analysis system 17, in accordance with techniques of this disclosure. Network management system 10 described herein implements intent-based networking and may implement intent-based analytics.

Network devices 14 of network 20 are interconnected via communication links to form a communication topology in order to exchange resources and information. Network devices 14 include spine switches 102 and rail switches 104, which may be, for example, routers, switches, gateways, bridges, hubs, access points, servers, firewalls or other intrusion detection systems (IDS) or intrusion prevention systems (IDP), computing devices / hosts / servers / nodes, computing terminals, printers, other network devices, or a combination of such devices. While described in this disclosure as transmitting, conveying, or otherwise supporting packets, network devices within network 20 may transmit data according to any other discrete data unit defined by any other protocol. Communication links interconnecting Spine switches 102 and rail switches 104 may be physical links (e.g., fiber, copper, and the like), wireless, or any combination thereof.

Network 20 may represent a data center network that connects physical infrastructure with network devices 14. In general, a data center network is a structured system of networking devices, protocols, and infrastructure designed to support the compute, storage, and communication needs of a data center. Data centers host computing and storage systems that provide applications, data processing, and services for enterprises, cloud providers, and internet-based services. In the example of FIG. 1, physical infrastructure includes servers 110, which may be examples of host computing devices. Servers 110 may include compute servers that host highly parallelized applications and services deployed using, e.g., virtual machines, containers, or other virtual compute instances or workloads and executed by GPUs 108. Servers 110 can also include storage servers of one or more storage systems. Servers 110 are connected to network devices 14 via physical interfaces of network interface cards (NICs) 106, and network 20 interconnects compute servers and storage servers of servers 110 to enable data communications among servers 110 and distributed applications and storage.

In a data center network, network devices 14may be structured as a data center fabric to interconnect servers 110 within one or more data centers. spine switches 102 and rail switches 104 can include Top-of-Rack switches, leaf switches, spine switches. The data center network may be built using a multi-tiered architecture to manage the large amount of internal (east-west) and external (north-south) traffic. The multi-tiered architecture may be a leaf-spine or three-tier design, for instance.

Servers 110 execute distributed application workloads for an application. In some examples, the application workloads are highly-parallelized application workloads. Examples of highly-parallelized application workloads include, e.g., machine learning workloads or graphics rending workloads. In some examples, servers 110 may additionally execute applications to provide services. Example services can include infrastructure services such as Domain-Name Service (DNS), Dynamic Host Configuration Protocol (DHCP), authentication and directory services, backup and storage management, and load balancing. Other example services can include external or client-directed services provided to tenants or clients; such services can include enterprise applications, web/email hosting, cloud computing services (e.g., compute, storage, containers, application hosting), virtualization services (e.g., VM hosting), application servers, streaming, collaboration and communication platforms, DevOps, backup and disaster recovery, content delivery networks, and e-commerce and other financial services, for example.

Servers 110 and/or system 2 may implement network virtualization to abstract the physical networking infrastructure and create virtual network environments. Network virtualization allows for better resource allocation, scalability, and automation. For example, network devices 14 and/or servers 110 may be configured to implement virtual network overlays that support features such as virtual switches, virtual firewalls, and virtual routers to interconnect virtual compute instances or other workloads executing on servers 110. Virtualization reduces reliance on physical hardware, allowing for greater agility in managing workloads and traffic flows. Unless described in context, system 2 should be considered as including servers 110.

Network 20 is shown coupled to network 18 via one or more communication links. Network 18 may provide access to other devices accessing resources of servers 11. Network 18 may be a public network, such as the internet, a private network or VPN, or other network. Network devices 14 may communicate with one another, servers 11, and network 18 using a variety of protocols at different layers of the Open Systems Interconnect model, such as Border Gateway Protocol (BGP) or other routing protocols, Virtual Extensible LAN (VXLAN), Ethernet VPN or BGP-EVPN, layer 2 protocols, and so forth.

Network management system 10 is communicatively coupled to network devices 14 via network 20. Network management system 10 may be coupled either directly or indirectly to the various network devices 14. Once network devices 14 are deployed and activated, administrator 12 uses network management system 10 to manage and monitor the network devices, e.g., using device management protocols. Administrator 12 may be a human operator or a computing system.

Network management system 10, also referred to herein as a network management system (NMS), and network devices 14 can be centrally maintained by an administrative group, such as an IT group of an enterprise or provider. Administrator 12 interacts with network management system 10 to remotely configure, monitor, and analyze network devices 14. For example, administrator 12 may receive alerts from network management system 10 regarding any of network devices 14. The alerts may include alerts regarding anomalous operation of one or more of network devices 14 that is detected using the techniques described herein. Administrator 12 may also view configuration data of network devices 14, modify the configurations data of network devices 14, add new network devices to network 20, remove existing network devices from network 20, or otherwise manipulate the network 20 and network devices therein. Although described with respect to an network, the techniques of this disclosure are applicable to other network types, public and private, including LANs, VLANs, VPNs, and the like.

Administrator 12 can use network management system 10 to configure network devices 14 to specify certain operational characteristics that further the objectives of administrator 12. For example, administrator 12 may specify for a network device 14 a particular operational policy regarding security, device accessibility, traffic engineering, quality of service (QoS), network address translation (NAT), packet filtering, packet forwarding, rate limiting, or other policies. Network management system 10 uses one or more network management and automation protocols designed for setting configuration data within network devices 14 and obtaining telemetry data indicative of the operational states of network devices. Such protocols may include Simple Network Management Protocol (SNMP), Network Configuration Protocol (NETCONF) or RESTCONF, OpenFlow / P4 or other protocols used in software-defined networking (SDN), telemetry protocols such as gRPC, and so forth. Network management system 10 may employ one or more automation frameworks that interact with network devices 14 via SSH or REST APIs to automate the deployment and configuration of network 20. Network management system 10 and network devices may communicate using communications 15 in accordance with protocols described above.

A user configuration of devices may be referred to as an "intent." An intent-based networking system may help to allow administrators to describe the intended network/compute/storage state. In some aspects, user intents can be categorized as business policies or stateless intents. Business policies, or stateful intents, may be resolved based on the current state of a network. Stateless intents may be fully declarative ways of describing an intended network/compute/storage state, without concern for a current network state.

In some aspects, stateful intents may include intents with respect to anomaly detection within the network. Such intents may be referred to as anomaly detection intents. As an example, an administrator may express an intent that the system reports an anomaly with respect to a network device if an operating characteristic of the network device varies from a baseline value established as described herein by more than a user-specified threshold. The intent may be applied to a single network device or groups of network devices. Examples of such groups include network devices of the same make and model, network devices from the same vendor, network device in the same area, etc.

Network management system 10 may implement intent-based networking to automate and manage network 20 using an intent-based approach in which administrator 12 defines how the network is to be configured and operate (intent 7), and network management system 10 ensures that the network configuration and operation match intent 7. Network management system 10 models a representation of network 20 as network graph 13 in which network devices 2, links, interfaces, and other network components are nodes, while the relationships or connections between the nodes are edges. Edges may thus represent physical cabling, logical links, protocols, or data flows, for example. Network graph 13 is a graph-based data model that enables users to visualize and manage the entire network holistically. Network graph 13 may be stored using a graph database (graphDB), which can be queried using a graph query language.

Using network graph 13 to model network 20, network management system 10 enables visually representing the state of network 20, providing insight into how devices and services are connected. The structure allows for a comprehensive view of the network as a whole, visualizing the relationships between devices, paths of data flows, and dependencies between different elements of system 2.

Administrator 12 using network management system 10 specifies a high-level intent 7 for system 2. Intent 7 for system 2 is high-level configuration data that describes and/or defines the desired outcomes for the architecture, configuration, and operation of system 2 rather than specific configuration details. For example, instead of configuring individual network devices, administrator 12 can specify isolation of specific workloads or certain traffic should be load-balanced. Intent 7 for system 2 may be specified by administrator 12 using network management system 10 in a variety of ways. For example, intent 7 may be expressed may be expressed as structured input parameters, e.g., according to YANG, JavaScript Object Notation (JSON), or other data modeling language. Network management system 10 may provide APIs, CLIs, or other means by which administrator 12 may specify, interact with (e.g., query), and update the intent.

In some examples, intent 7 is specified as a template or model (also referred to as a "blueprint"). The intent may include a physical topology for the layout of network devices 14, servers 11, and links among these devices; a logical topology defining how the network is logically segmented (e.g., subnets, VLANs, and routing policies) and how traffic is logically routed among network devices 14 and servers 11; intent-based policies that specify, e.g., requirements for security, performance, or compliance; and/or roles for the network devices 14 or other system 2 components (e.g., "spine switch", "leaf switch", "link") as well as relationships among network devices 14 or other system 2 components. Intent 7 may be a network graph (an "intent network graph"). Intent 7 may be a directed acyclical graph. Intent 7 may be queryable using a graph query language.

Network management system 10 may use intent 7 to generate a corresponding network graph 13 that represents the implementation of intent 7. Whereas intent 7 is a high-level specification, network graph 13 captures the operational details of system 2, such as device configurations, link status, and data flows. Network management system 10 translates the high-level specification to low-level configuration data for network devices 14, for instance, and configures the system 2 with this low-level configuration data in a manner that is therefore based on intent 7, ensuring that the actual network topology and configuration aligns with what was specified. That is, network management system 10 using network graph 13 ensures that the actual state of system 2 aligns with the intended state specified by intent 7. Network management system 10 checks and verifies that all devices are configured and operating in accordance with the defined intent. Changes in the network determined from configuration or telemetry data obtained from system 2 are reflected in network graph 13 in real time, and network management system 10 can respond automatically to deviations by making corrections to align system 2 to intent 7 or by notifying administrator 12.

Network management system 10 using network graph 13 may perform closed-loop automation in which system 2 is continuously monitored and adjusted to meet the intended state without manual intervention. By network graph 13, network management system 10 may continuously validate network performance, reduce misconfigurations, and ensure compliance with design policies.

Network graph 13 may be queried by administrator 12, e.g. using network management system 10 or another system. Network graph 13 is continuously updated to reflect the real-time state of the network, allowing administrator 12 to execute graph queries that give insights into the state and relationships of network devices 14. Graph queries are based on relationships between nodes, such as finding the path between two devices or determining how a service flows through the network. Graph queries can thus help administrator 12 perform a variety of tasks, such as troubleshooting, monitoring, and configuration changes. For example, a graph query can enable topology discovery by traversing network graph 13 to retrieve the entire network topology, including all devices and their interconnections. This can provide visibility into how all switches, routers, and links are connected. A graph query may be used to find all devices and links between server 110 and network device 14C. A graph query can retrieve information indicating the status of all or a subset of network devices and links in network graph 13. Other graph queries may include those relating to bandwidth and resource utilization, redundancy and resilience, or policy compliance. Graph queries may be expressed using GraphQL, Cypher, Gremlin, SPARQL, Property Graph Query Language (PGQL), or other supported language(s) to extract specific data or insights from network graph 13. Graph queries may be run via REST API, internally, or via another type of interface.

Network management system 10 determines anomalies in system 2. In general, an anomaly is a deviation in system 2 from intent 7 (e.g., intended network configuration or operational state). Network management system 10 may determine anomalies based on configuration data or telemetry data obtained from devices of system 2 or based on probe data generated from probes to network devices 14 or servers 11, for example.

Telemetry data can be operating temperature data, voltage data, current draw data, or other operating characteristics regarding the operation of network devices 14. Other characteristics that may be collected are transmitted/received bytes/packets which indicates traffic volume, error packet count, e.g., cyclic redundancy check (CRC), frame check sequence (FCS), etc., which may indicate deteriorating operating state. Network management system 10 may analyze and use the telemetry data in various ways. During an initial baseline establishment period, network management system 10 may collect and store the telemetry data. In some aspects, the baseline establishment period may be thirty days. At the end of the baseline establishment period, controller device may determine baseline values for various parameters in the telemetry data such as a baseline temperature, baseline voltage, baseline current draw, etc. Baseline values may be established for individual network devices or groups of network devices. For example, baseline values may be established for network devices from the same manufacturer, network devices that are the same make and/or model, network devices that are in the same general area of a data center, network devices that are configured with the same software (operating system, applications, etc.) or other groupings. After baseline values for the various parameters have been established, network management system 10 may continue to receive telemetry data from network devices 14. Network management system 10 can compare the currently received telemetry data with the baseline data, and using threshold values determined according to anomaly detection intent provided by administrator 12, determine if a network device of network devices 14 is operating anomalously and in this way determine one or more anomalies for system 2.

Anomalies may include network device 14 misconfigurations, cabling issues, policy violations, unexpected traffic patterns or other load, or hardware failures, for instance. A list of example anomalies, affected nodes, and their descriptions is as follows, but additional categories and types of anomalies are contemplated.

| **Anomaly** | **Node(s)** | **Schema** |
|---|---|---|
| BGP | link node across neighbor interfaces identified through src/dst IP or system node with counter | Anomaly_type, system_id; ip, asn, and vrf name for src and dst; addr_family, expected vs actual session state (enum values) |
| Cabling | interface where the neighbor interface mismatch occurred + system id | Anomaly_type, system_id, device_identifier, expected vs actual neighbor interface (name) |
| | | Miscable |
| | | Link node is the right place to add this anomaly (a) |
| | | System ID --> System node |
| | | Map between id to node |
| | | Find Interface name --> Find the interface node |
| | | Then interface node --> associated link node |
| Interface | interface where state mismatch occurred + system id | Anomaly _type, system_id, device_identifier, expected vs actual interface state |
| | | Interface node (a) |
| Hostname | system node | Anomaly _type, system_id, device_identifier, expected vs actual FQDN |
| | | System node |
| Lag | Redundancy group/System node | Anomaly _type, system_id, device_identifier, interfaces_up, intf_up_count (expected vs actual) |
| | | Redundancy group (a) |
| | | System + mlag --> interfaces -> port channel node |
| Liveness | system or device node | Anomaly _type, system_id, device _identifier, expected vs actual aos agent names running on device |
| | | System node (a) |
| Route | interface node where next hop mismatch occurred + system id | Anomaly _type, system_id, device _identifier, destination subnet of route, expected vs actual route destination status (enum values) |
| | | Static routes, dynamic routes (auto generation from configuration underlay network), multiple type of routes Match based on next hop |
| Config | device | Anomaly _type, system_id, device_identifier, expected vs actual device config (string) |
| | | System node (a) |
| Deployment | system node | Anomaly _type, system_id, device_identifier, expected vs actual deployment status (success or failed). |
| | | System node (a) |
| BP Rendering | system node | anomaly _type, bp_id, list of systems with failed rendering |
| | | Blueprint (a) |
| Streaming | | Anomaly _type, endpoint_type, hostname, port, protocol, expected vs actual status |
| | | Blueprint (a) |
| Mac | interface name + system id | Anomaly _type, system_id, device_identifier, expected max_interval vs actual int_name, move_count, and move interval |
| | | Vn endpoint (a) |
| | | Static vlan, Vlan, Footprint, Vn endpoint (vlan configured on the ports) |
| | | Corresponding |
| | | Interface of the system |
| | | Vn endpoint |
| | | System -> interface -> link -> interface of the otherside -> vn endpoint --> vn instance--> find the vland id |
| Mlag | Redundancy group/System node | Anomaly _type, system_id, device _identifier, int_name, intf_state, domain_state (expected vs actual) |
| | | Port channel (a) |
| | | Check the lag anomaly, how to get to it |
| Probe | Tbd: need k/v pairs | Anomaly _type, probe_id, stage_name, item_id, properties, expected vs actual anomalous range (min to max) |
| Config Mismatch | System node | Bp_id, collector_name, expected vs actual config |

### Probe Anomalies

| **Anomaly type** | **Nodes** | **Comments** | |
|---|---|---|---|
| Hot/cold interface warning | System, interface | There are three hot/cold predefined probes: | |
| | | | • fabric_hotcold_ifcounter |
| | | | • spine_superspine_hotcold_ifcounter |
| | | | • specific_hotcold_ifcounter |
| | | There are three stages in the **fabric_hotcold_ifcounter** probe which raise anomalies: | |
| | | | • hot_leaf_int |
| | | | • cold_leaf_int |
| | | | • device_hot_anomalous |
| | | | • device cold anomalous |
| | | For anomalies raised in **hot_leaf_int** and **cold_leaf_int** stages, the following properties can be used to match an anomaly to graph nodes (anomaly identity property => graph node type and property): | |
| | | | • system_id => system. system_id |
| | | | • interface => interface.if_name |
| | | The following graph query can be used to select a system and an interface by properties mentioned above found in an anomaly: | |
| | | 'node("system", | |
| | | system_id=system_id).out("hosted_interfaces").node("interf ace", if_name=interface_name)' | |
| | | For anomalies raised in **device_host_anomalous** and **device_cold_anomalous** the matching should be the following: | |
| | | | • system_id => system.system_id |
| Critical services alerts | System, interface | There are two predefined probes: | |
| | | | • "server_sla_a" |
| | | | • "server_sla_b" |
| | | There are three stages in the "server_sla_a" probe which raise anomalies in the probe: | |
| | | | • "1-day bandwidth alerts" |
| | | | • "1-hour bandwidth alerts" |
| | | | • "30-days bandwidth alerts" |
| | | For anomalies raised in them the following matching should be used: | |
| | | | • system _id => system. system_id |
| | | | • Interface => interface.if_name |
| | | There is only one stage in the "server_sla_b" probe which raises alerts: | |
| | | | • "Alerting and 7-days trending" |
| | | Alerts in this stage are associated to systems and has only the following key: | |
| | | | • "system_id" => "system.system_id" |
| Spine Fault Tolerance | BP meta node Or all spines | In short: anomalies raised in this probe can't be associated with graph nodes as they indicate presence of problem in an entire blueprint. | |
| | | This probe raises a single anomaly in the "Persistent fault intolerant traffic" stage which indicates whether a total spine-to-leaf traffic exceeds a bandwidth calculated like for bandwidth of number of spines minus number of spines which failure can be tolerated. | |
| 802.1X issues | interface | This probe raises anomalies in the "Unexpected 802.1x authentication status" stage, the matching should be the following: | |
| | | | • System_id = system.system_id |
| | | | • Interface => interface.if name |
| Interface flapping | System, interface | There are three probes: | |
| | | | • Fabric_interface_flapping |
| | | | • Spine_superspine_interface_flapping |
| | | | • Specific_interface_flapping |
| | | The fabric_interface_flapping probe raises anomalies in the following stage: | |
| | | | • If_status_flapping |
| | | | • System_flapping |
| | | Anomalies raised in the if_status _flapping stage can be associated with the following nodes according to the following matching: | |
| | | | • System _id => system.system_id |
| | | | • Interface => interface.if_name |
| | | Anomalies raised in the system _flapping stage can be associated with the following nodes according to the following mapping: | |
| | | | • System_id => system.system_id |
| BGP Monitoring | System | The "Sustained BGP Session Flapping" stage raises anomalies which can be directly mapped by and to: | |
| | | | • System _id => system.system_id |
| | | These anomalies as built-in BGP anomalies have the following identity attributes: | |
| | | | • Af |
| | | | • Dest_asn |
| | | | • Dest_ip |
| | | | • Source asn |
| | | | • Source_ip |
| | | | • Vrf_name |
| | | And can be associated to graph paths which represent BGP sessions in the similar way as BGP built-in anomalies. | |
| EVPN Host Flapping | System | The "Sustained EVPN Host Flapping" stage raises anomalies which can be mapped by and to: | |
| | | | • System_id => system.system_id |
| Resource health issues | System | | |
| Device Environmental Checks | System | The following stages of this probe raises anomalies: | |
| | | | • Airflow Alarm Anomalies |
| | | | • Fan State Anomaly |
| | | | • Operational Fan Tray Count Anomaly |
| | | | • Operational Power Supply Count Anomaly |
| | | | • Power Supply Fan State Anomaly |
| | | | • Power Supply State Anomaly |
| | | | • Power Supply Temperature Alarm |
| | | | • Temperature Alarm |
| | | All these stages raise anomalies which can be associated to: | |
| | | | • System _id => system.system_id |
| Type -3 Route Validation | vn_instance | The "Sustained Anomalies" stage raises anomalies which can be associated with: | |
| | | | • "system _id" => "system.system_id" |
| | | | • "vni" => "virtual_network.vn_id" |
| | | The following graph query can be used to find a | |
| | | "vn_instance" node by "system _id" and "vni": | |
| | | 'node("system", | |
| | | system_id=system_id).out("hosted_vn_instances").node("v n instance", | |
| | | name="vn_instance").out("instantiates").node("virtual_netw ork", vn id=vni)' | |
| Type-5 Route Validation | sz_instance | The "Sustained Anomalies" stage raises anomalies which can be associated with: | |
| | | | • System_id => system.system_id |
| | | | • Rt => security_zone.vni_id |
| | | The following graph query can be used to select | |
| | | "sz_instance" node by "system_id" and "rt": | |
| | | 'node("system", | |
| | | system _id=system_id).out("hosted_sz_instances").node("sz _instance", | |
| | | name="sz_instance").in_("instantiated_by").node("security _zone", vni_id=rt)' | |
| ECMP Imbalance | System | There are three probes which detect ECMP imbalance issues: | |
| | | Fabric_ecmp_imbalance | |
| | | | • Spine_superspine_ecmp_imbalance |
| | | | • External_ecpm_imbalance |
| | | The fabric_ecmp_imbalance probe has the following stages which raise anomalies: | |
| | | | • System_imbalance |
| | | | • imbalanced_system_count_out_of_range |
| | | Anomalies raised in system_imbalance can be associated with system nodes by: | |
| | | | • System_id => system.system_id |
| | | Anomalies raised in the imbalanced_system_count_out_of range stage doesn't have properties by which they could be directly associated to concrete nodes but locally they can be associated to all leaf system nodes and to all interface nodes on leafs facing leafs. | |
| | | The spine_superspine_ecmp_imbalance probe raises anomalies in the following stages: | |
| | | | • System_tx_imbalance |
| | | | • imbalanced_system_count_out_of_range |
| | | The situation is similar to the previous probe for the first stage. As for the second stage an anomaly can be associated to all spine system nodes and to all interfaces on spines facing superspines. | |
| | | The exernal_ecmp_imbalance probe raises anomalies in the following stages: | |
| | | | • sustained_ecmp_imbalance |
| | | | • live_system_imbalance_count |
| | | The situation is similar to the other two probes for the first stage. As for the second stage, an anomaly raised can be associated to all external facing leafs and their external facing interfaces. | |
| Device telemetry health | System | Probe name: "device_telemetry_health" | |
| | | The probe raises anomalies in the following stages: | |
| | | | • Degraded Wait Time |
| | | | • Service Enablement Failures |
| | | | • Sustained Execution Failures |
| | | | • Sustained Execution Timeouts |
| | | | • Sustained Execution Underruns |
| | | | • Check gRPC Connection Resets |
| | | | • Check gRPC Initial Sync Timeouts |
| | | | • Check gRPC Periodic Response Timeouts |
| | | | • Check gRPC Response Processing Failures |
| | | | • Check gRPC Sequence Number Overruns |
| | | | • Check gRPC Server Reset Count |
| | | All of the stages above raise anomalies which can be associated with system graph nodes by: | |
| | | | • System _id => system.system_id |
| MLAG imbalance | Redundancy group, Interface, System | The probe raises anomalies in the following stages: | |
| | | | • live_mlag_imbalance |
| | | | • live_port_channel_imbalance |
| | | | • mlag_port_channel_imbalance_out_of_range |
| | | Anomalies raised in live_imbalance can be associated with the following nodes: | |
| | | | • Rack => redundancy_group.label |
| | | | • Remote_system => system.label |
| | | Anomalies raised in live_port_channel_imbalance: | |
| | | Rack => redundancy _group.label • | |
| | | Mlag_id => interface.mlag_id | |
| | | | • Leaf => system.label |
| | | Anomalies raised in mlag_port_channel_imbalance_out_of_range: | |
| | | | • Rack => redundancy _group.label |
| | | | • Mlag_id => interface.mlag_id |
| LAG Imbalance | System, Port Channel | The probe raises anomalies in the following stage: | |
| | | | • lag_imbalance_range |
| | | Anomalies can be associated with: | |
| | | System_id => system.system_id | |
| | | Port _channel_id => port _channel.port _channel_id | |

Because network management system 10 continually updates network graph 13 to reflect the actual, real-time state of system 2, network management system 10 may determine anomalies by comparing network graph 13 to intent 7 for system 2. Any deviation between network graph 13 and intent 7 represents an anomaly.

When an anomaly is detected, network management system 10 associates the anomaly to specific node(s), edge(s), and/or one or more properties within network graph 13. For example, if network device 14B is down or misconfigured, this anomaly will be linked to the graph node in network graph 13 representing network device 14B. As another example, if there is a link and/or cabling-related anomaly, network management system 10 will associate the anomaly with the edge connecting two nodes. Network management system 10 may output, for display, a user interface depicting network graph 13 and visually indicating anomalies at the associated node(s) or edge(s).

Network management system 10 may use graph queries to detect, analyze, and/or report anomalies. Such graph queries may traverse the graph to look for deviations between the actual state of system 2 and intent 7. Queries may be written by administrator 12 or a network management system 10 vendor, for instance, and can be designed to check the status and/or configurations of network devices 14 and other components of system 2, find missing or misconfigured paths (e.g., an interface not assigned the correct VLAN), or analyze dependencies and their impact (e.g., how the failure of one device might affect the rest of the network), among other purposes.

Generally speaking, network management system 10 identifies multiple anomalies in system 2 that are deviations from the intent for system 2. The anomalies are each associated to one or more nodes of a network graph, e.g., as properties or "tags" of the nodes. The network graph augmented with anomaly data may be a modified intent 7 or of network graph 13. In some cases, analysis system 17 obtains the intent in a structured but non-graph form from network management system 10 and processes the intent to generate a queryable intent network graph. Analysis system 17 is a computing system and may be incorporated within network management system or be implemented and deployed to another computing system. Analysis system 17 applies a predefined graph query to the augmented network graph that matches on the nodes having the anomalies, on the relationships among those nodes, and on the anomalies themselves. The predefined graph query is associated with data that indicates which of the anomalies matched by the predefined graph query is the key anomaly. The data may further indicate other anomalies associated with the key anomaly. The key anomaly is an anomaly that is, e.g., a cause of the other anomalies associated with the key anomaly, the anomaly that has the most impact of the anomalies matched by the predefined graph query, or that is otherwise deemed as significant (e.g., "key") by an operator or expert. The analysis system may execute the predefined graph query with respect to network graph 13 and, upon a match to nodes of network graph 13, output an indication that system 2 is experiencing the key anomaly. The match may be a subgraph of network graph 13. The predefined graph query and the data may be generated, stored, and displayed as a knowledge card.

The graph query may be configured to match particular nodes of network graph 13 by node identifier. The graph query may also, or alternatively, be configured to match types of nodes of network 13 by type (e.g., "system", "leaf", "spine"). This latter case may be effectively a template that may match many different subgraphs of network graph 13, should such subgraphs experience the anomalies also matching the graph query. For example, a network many have many leaf-spine pairings/linkages. A graph query that matches type leaf out to type spine will match these pairings.

In some aspects of the techniques, analysis system 17 may map key anomalies present in system 2 into issues at the application level. Services executing on servers 110 (also referred to as "compute nodes") connected via network 20 and clients interacting with the services may be impacted by key anomalies. Analysis system 17 may store service impact data that indicates one or more services that may be impacted by a key anomaly. For example, a down interface may prevent access to a service running on a compute node that uses the interface for communication. Upon identifying a key anomaly, analysis system 17 uses the service impact data to identify one or more services that may be impacted by the key anomaly. Analysis system 17 may output an indication of the one or more services. In some examples, analysis system 17 extends a visual depiction of at least a portion of the topology of the network to include the service topology, effectively extending network graph 13 to visually indicate services and/or clients that are affected by a key anomaly. Returning to the above example, service impact data associated with a key anomaly specifies that a down interface of a leaf switch may impact all services running on a compute node connected to the down interface of the leaf switch. Analysis system 17 may extend a topology of the network to indicate the services running on the affected compute node and, in some cases, to indicate clients connected to the services. These indications of affected services and clients may be considered synthetic anomalies, in that they are not identified by network management system 10 using telemetry, configuration, or operational data from the network or compute nodes, but they are instead identified as likely to occur due to a key anomaly, based on the service impact data.

In some aspects of the techniques, network management system 10 associates operational data to one or more nodes of a network graph representing an intent, e.g., intent 7. Such operational data can indicate, for instance, down interfaces, hold/cold interfaces, interface flapping, bad optics, lag issues, resource utilization, environmental factors (fan, power, temperature), device traffic, configuration deviations, a number of routes in an EVPN, a flood list size for an EVPN, and so forth. As examples, a CPU utilization for leaf switch may be 80%, a link may have a lag of >1ms, or an EVPN flood list may be 25 interfaces. The operational data is associated to one or more nodes of the network graph, e.g., as properties or "tags" of the nodes. Analysis system 17 applies a predefined graph query to the network graph that matches on the nodes having properties that satisfy thresholds defined in the graph query, on the relationships among those nodes, and on the properties that satisfy the thresholds. The predefined graph query may be based on a Service Level Agreement (SLA) / Service Level Expectation (SLE) for the network. The predefined graph query is associated with data that analysis system 17 used to identify and indicate one or more affected nodes of the network. Analysis system 17 may execute the predefined graph query with respect to the network graph and, upon a match to nodes of the network graph, output an indication that one or more affected nodes of the network are experiencing an issue, e.g., low / poor health, or a positive indication that one or more "affected nodes" are meeting the SLAs/SLEs. The match may be a subgraph of a network graph representing an intent.

Analysis system 17, network management system 10, and/or administrator 12 may operate to address one or more anomalies based on a determination of a matching subgraph that indicates a plurality of the anomalies are associated, and/or based on identifying the key anomaly. For example, analysis system 17 may send an indication of a key anomaly and/or of an association of a plurality of anomalies to network management system 10 to cause network management system 10 to perform one or more actions to address at least one of the plurality of anomalies. In some cases, analysis system 17 may automatically address at least one of the plurality of anomalies directly. In some cases, an operator (e.g., administrator 12) makes a physical change (e.g., recabling), a configuration change, or other change to system 2 to address at least one of the plurality of anomalies. These operations and changes may be performed automatically in some cases by analysis system 17 and/or network management system 10, or in response to user input from administrator 12.

In accordance with the techniques of the disclosure, analysis system 17 implements end-to-end assurance for application workloads executed by GPUs 108 and distributed across a plurality of host computing devices, such as servers 110. The application workloads may include, e.g., a machine learning application workload or graphics rendering workload. In an example, analysis system 17 receives, from various elements of system 2, time series data comprising performance indicators for elements residing at a plurality of layers associated with the system 2. The plurality of layers include, e.g., an application layer, a compute layer, and a network layer. The elements generating performance indicators may include, e.g., spine switches 102, rail switches 104, NICs 106 and GPUs 108 of servers 110, and servers 110. The performance indicators may include, e.g., application-level metrics, collective communication logs, GPU metrics, RoCEv2 telemetry, sFlow and flow telemetry data, and network telemetry data.

Analysis system 17 creates, based on the time series data, dependency graph 114 comprising nodes and edges. Analysis system 17 creates dependency graph 114 on a per-application basis, in other words, analysis system 17 creates a different dependency graph 114 for each application instance or application type executed by system 2, each application instance associated with one or more application workloads executed by GPUs 108. The nodes represent the elements residing at the plurality of layers, and the edges represent cross-layer relationships between pairs of the elements, each of the elements of each pair residing at different layers of the plurality of layers. For example, analysis system 17 maps GPUs 108 of the compute layer to network devices 14 of the network layer, and creates dependency graph 114 based on the mapping.

Analysis system 17 determines, based on the time series data, an anomaly in the performance of the application workload. In some examples, analysis system 17 optionally applies a machine learning (ML) model to the time series data to determine the anomaly.

Analysis system 17 determines, based on a mapping between the application workload and an element of the elements residing at the plurality of layers within dependency graph 114, an issue with the element as a root cause of the anomaly in the performance of the application workload. For example, analysis system 17 determines, based on a dependency of a workload 112 on an element of the network layer within the dependency graph 114, an issue with the element of the network layer as a root cause of the anomaly in the performance of the workload. Analysis system 17 outputs an indication of the issue with the element of the elements residing at the plurality of layers as the root cause of the anomaly in the performance of the application workload. In some examples, the indication may be a visual, audio, or textual indication.

In some examples, analysis system 17 performs a remedial action for the root cause of the anomaly in the performance of the application workload. In some examples, to perform the remedial action, analysis system 17 configures an end-to-end path of communication between GPUs 108 of two servers 110 within a compute layer of the plurality of layers that execute the application workload. In some examples, to perform the remedial action, analysis system 17 configures a congestion control scheme of, e.g., one of spine switches 102 or rail switches 104 within a network layer of the plurality of layers that carries network traffic associated with the application workload. In some examples, to perform the remedial action, analysis system 17 provides an indication as an output to an administrator. In some examples, to perform the remedial action, analysis system 17 moves an application workload, e.g., between GPUs of a single server or from a first GPU of a first server to a second GPU of a second server, etc. In some examples, to perform the remedial action, analysis system 17 reconfigures network 20, such as configuring NICs 106, rail switches 104, or spine switches 102 to use different interfaces, links, or paths, etc.

In some examples, analysis system 17 determines a health of the elements residing at the plurality of layers based on the time series data and the dependency graph and outputs an indication of the health of the elements for display at the display device. In some examples, analysis system 17 determines an end-to-end path of communication between two GPUs of servers 110 within a compute layer of the plurality of layers that execute the application workload based on the time series data and the dependency graph, and outputs a representation of the end-to-end path for display at the display device.

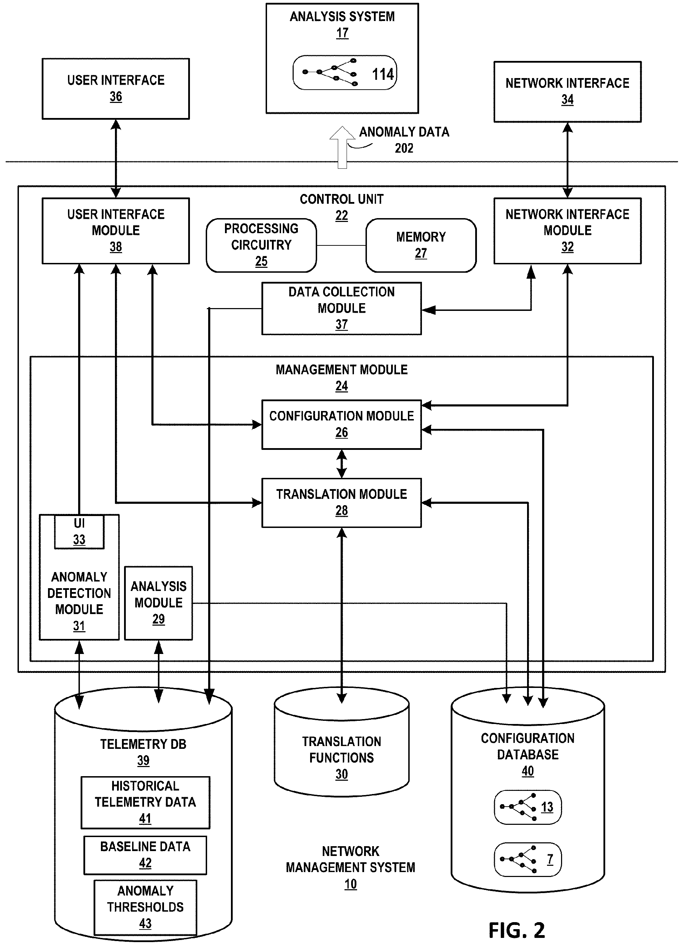

FIG. 2 is a block diagram illustrating analysis system 17 and an example set of components for analysis system 17 of FIG. 1, in accordance with techniques of this disclosure.

Network management system 10 and analysis system 17 may include processing circuitry 25, memory 27, one or more input devices, one or more communication units, and one or more output devices. (Processing circuitry 25 and memory 27 are shown only for network management system 10 in FIG. 2, but analysis system 17 may in some implementations include separate instances of processing circuitry 25 and memory 27.) In some examples, the processing circuitry 25 includes one or more of a microprocessor, a controller, a digital signal processor (DSP), an application specific integrated circuit (ASIC), a field-programmable gate array (FPGA), or equivalent discrete or integrated logic circuitry, or other types of processing circuitry 25. Network management system 10 and analysis system 17 may use the processing circuitry 25 to perform operations in accordance with one or more aspects of the present disclosure using software, hardware, firmware, or a mixture of hardware, software, and firmware residing in and/or executing the network management system 10 and analysis system 17, and may be distributed among one or more devices. The one or more storage devices of memory 27 may be distributed among one or more devices. Processing circuitry 25 and memory 27 may provide an operating environment or platform for one or more modules or units, which may be implemented as software, but may in some examples include any combination of hardware, firmware, and software. Processing circuitry 25 may execute instructions and the one or more storage devices, e.g., memory 27, may store instructions and/or data of one or more modules or units. The combination of the processing circuitry 25 and memory 27 may retrieve, store, and/or execute the instructions and/or data of one or more applications, modules, units, or software. Processing circuitry 25 and/or memory 27 may also be operably coupled to one or more other software and/or hardware components, including, but not limited to, one or more of the components illustrated in FIG. 2.

In another example, network management system 10 and analysis system 17 are implemented on any suitable computing system having one or more computing devices, such as desktop computers, laptop computers, gaming consoles, smart televisions, handheld devices, tablets, mobile telephones, smartphones, etc. In some examples, at least a portion of network management system is distributed across a cloud computing system, a data center, or across a network, such as the Internet, another public or private communications network, for instance, broadband, cellular, Wi-Fi, and/or other types of communication networks, for transmitting data between computing systems, servers, and computing devices.

In some examples, network management system 10 and analysis system 17 are connected by and communicate via a network. In some examples, analysis system 17 is implemented as one or more modules of units of network management system 10.

In this example, network management system 10 includes control unit 22, network interface 34, and user interface 36. Network interface 34 represents an example interface that can communicatively couple network management system 10 to an external device, e.g., one of network devices 14 of FIG. 1. Network interface 34 may represent a wireless and/or wired interface, e.g., an Ethernet interface or a wireless radio configured to communicate according to a wireless standard, such as one or more of the IEEE 802.11 wireless networking protocols (such as 802.11 a/b/g/n or other such wireless protocols). Network management system 10 may include multiple network interfaces in various examples, although only one network interface is illustrated for purposes of example.

Control unit 22 represents any combination of hardware, software, and/or firmware for implementing the functionality attributed to control unit 22 and its constituent modules and elements. When control unit 22 includes software or firmware, control unit 22 further includes any necessary hardware for storing and executing the software or firmware, such as one or more processors or processing units. In general, a processing unit may include processing circuitry, one or more microprocessors, digital signal processors (DSPs), application specific integrated circuits (ASICs), field programmable gate arrays (FPGAs), or any other equivalent integrated or discrete logic circuitry, as well as any combinations of such components. Furthermore, a processing unit is generally implemented using fixed and/or programmable logic circuitry.

User interface 36 represents one or more interfaces by which a user, such as administrator 12 (FIG. 1) interacts with network management system 10, e.g., to provide input and receive output. For example, user interface 36 may represent one or more of a monitor, keyboard, mouse, touchscreen, touchpad, trackpad, speakers, camera, microphone, or the like. Furthermore, although in this example network management system 10 includes a user interface, it should be understood that administrator 12 need not directly interact with network management system 10, but instead may access network management system 10 remotely, e.g., via network interface 34.

In this example, control unit 22 includes user interface module 38, network interface module 32, data collection module 37, and management module 24. Control unit 22 executes user interface module 38 to receive input from and/or provide output to user interface 36. Control unit 22 also executes network interface module 32 to send and receive data (e.g., packets) via network interface 34. User interface module 38, network interface module 32, data collection module 37 and management module 24 may again be implemented as respective hardware units, or in software or firmware, or a combination thereof.

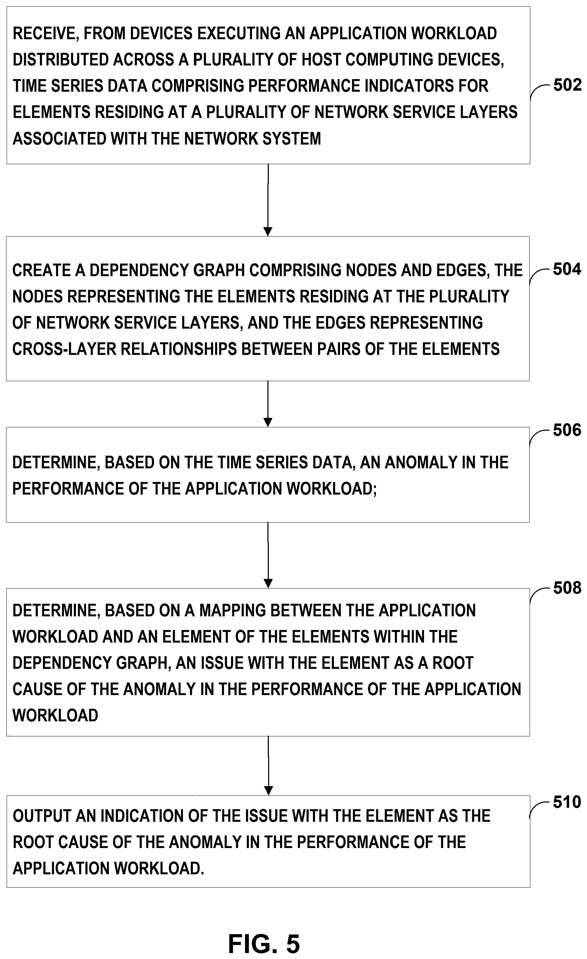

Example user interfaces generated and output by user interface module 38 or a similar user interface module of analysis system 17 are depicted in FIGS. 5, 6A-6D, 11, 12A, and 13A.

Control unit 22 can execute data collection module 37 to obtain telemetry data from network devices, e.g., network devices 14 (FIG. 1). Data collection module 37 may store the telemetry data in telemetry database (DB) 39 as a time series of telemetry data. Data collection module 37 can obtain telemetry data from network devices using a "push" model or a "pull" model. In the push model, a network device (e.g., an agent on a network device), is configured to periodically send telemetry data to data collection module 37. In the pull model, data collection module 37 periodically requests that the network device (e.g., the agent on the network device) provide the telemetry data to data collection module 37. The service interval can be configurable depending on what kind of telemetry data is being collected. As an example, data may be collected every five seconds for optical transceivers. Data collection module 37 may store telemetry data obtained during the baseline establishment period as historical telemetry data 41. In addition to storing the telemetry data, data collection module 37 may store a timestamp in association with the telemetry data to indicate when the telemetry data was collected.

Control unit 22 executes management module 24 to manage various network devices, e.g., network devices 14 of FIG. 1. Management includes, for example, configuring and analyzing the network devices according to instructions received from a user (e.g., administrator 12 of FIG. 1) and providing the user with the ability to submit instructions to configure and analyze the network devices. In this example, management module 24 further includes configuration module 26, translation module 28, analysis module 29, and anomaly detection module 31.

Management module 24 is configured to receive an intent (e.g., a high-level configuration instruction or anomaly detection instruction) for a set of managed network devices from a user, such as administrator 12, or another system (hereinafter, "the user"). In some examples, management module 24 may be referred to herein as a "fabric manager." Over time, the user may update the configuration instructions, e.g., to add new services, remove existing services, or modify existing services performed by the managed devices. Further, the user may update anomaly detection instructions over time to change how the analysis module 29 uses telemetry data to detect an anomaly. The intents may be structured according to, e.g., YANG. In some examples, management module 24 also provides the user with the ability to submit translation functions that translation module 28 executes to transform intents to device-specific, low-level configuration instructions, as discussed below.

Network management system 10 also includes configuration database 40. Configuration database 40 may include a data structure describing managed network devices, e.g., network devices 14. Configuration database 40 may act as an intent data store, which may be used to persist and manage collections of intent data models. For example, configuration database 40 may include information indicating device identifiers (such as MAC and/or IP addresses), device type, device vendor, devices species (e.g., router, switch, bridge, hub, etc.), or the like. Configuration database 40 may store current configuration information (e.g., intent data model, or in some cases, both intent data model and low-level configuration information) for the managed devices (e.g., network devices 14). Configuration database 40 may include a database that comprises a intent data model. Configuration database 40 may be a graph database (graphDB) designed to represent and query data structured as graphs, consisting of nodes, edges, and properties.

Management module 24 may maintain a data structure in configuration database 40. The data structure may include a plurality of vertices and a plurality of edges, each vertex of the plurality of vertices representing a respective network device of a plurality of network devices (e.g., network devices 14) or a respective stateless intent of a plurality of stateless intents, and the plurality of edges defining relationships between the plurality of vertices. Management module 24 may receive an indication of a stateful intent. For example, management module 24 may receive intent unified-graph-modeled configuration data for a set of managed network devices from a user, such as administrator 12. This intent can be translated and configured into the graph data structure.

Translation module 28, which may also be referred to herein as a "device manager," may determine which devices are managed using configuration database 40. Translation module 28 determines which of translation functions 30 to execute on the high-level configuration instructions based on the information of configuration database 40, e.g., which of the devices are to receive the low-level configuration instructions (e.g., device-level configuration instructions). Translation module 28 then executes each of the determined translation functions of translation functions 30, providing the high-level configuration instructions to the translation functions as input and receiving low-level configuration instructions. Translation module 28 may then provide the low-level configuration instructions to configuration module 26.

After receiving the low-level configuration instructions from translation module 28, configuration module 26 sends the low-level configuration instructions to appropriate managed network devices for which configuration is to be updated via network interface module 32. Network interface module 32 passes the low-level configuration instructions to network interface 34. Network interface 34 forwards the low-level configuration instructions to the network devices. In some examples, functions of translation module 28 may be performed by network devices. For example, control unit 22 may output an indication of the high-level configuration instructions to a network device and an agent for translation module 28 operating at the network device translates the received high-level configuration instructions into low-level configuration instructions for the network device.

Although user interface 36 is described for purposes of example of allowing administrator 12 (FIG. 1) to interact with network management system 10, other interfaces may be used in other examples. For example, network management system 10 may include a representational state transfer (REST) client (not shown) that may act as an interface to another device, by which administrator 12 may configure network management system 10. Likewise, administrator 12 may configure network devices 14 by interacting with network management system 10 through the REST client.

Analysis module 29 may analyze telemetry data in telemetry database 39 to determine baseline data 42. For example, analysis module 29 may analyze a time series of data collected by data collection module 37 and stored as historical telemetry data 41 to determine baseline operating characteristics for temperature, voltage, current draw etc. of a network device. Analysis module 29 can determine multiple sets of baseline data. For example, analysis module 29 can analyze the time series of data to determine baseline operating characteristics for a particular network device and/or a group of network devices. For example, analysis module 29 can determine baseline operating characteristics for a group of network devices that are from the same vendor, that are the same make and/or model, that are in the same location, etc. In some examples, analysis module 29 may determine baseline operating characteristics with respect to a time of day, day of week, week of year etc. As an example, a network device (e.g., network device 14A of FIG. 1) may communicate more data during working hours of working days when compared to non-working hours and on weekends. As a result, baseline operating temperature, voltage, and/or current parameters may be higher during working hours than during non-working hours. As an additional example, a data center may have different temperature characteristics in different parts of the data center. For example, a data center may have different cooling capacity in different areas of the data center, or there may be more equipment generating heat in some areas of the data center. As a result, network devices in one area of a data center may have different baseline operating temperatures than network devices in a different area of the data center.

In some aspects, baseline data 42 may be based on a time series of data obtained from historical telemetry data 41 that may be collected over a thirty day period. However, other time periods greater than or less than thirty days are possible. In general, the collection period may be dependent on data storage availability of network management system 10. As new data is collected, analysis module 29 may utilize the new data to recalculate baseline data 42. For example, analysis module 29 may maintain baseline operating characteristics such as a baseline operating temperature or baseline voltage as a moving average of the most recent thirty day period.

Analysis module 29 can determine various parameters from the historical telemetry data 41 to generate baseline data 42 for network devices and groups of network devices. As an example, analysis module 29 may perform statistical analysis to determine various baseline statistical measures associated with the time series of values for operating temperature, voltage, current draw, etc. For example, analysis module 29 may determine average values, standard deviations, quantiles, percentile thresholds, probability density function, etc. Analysis module 29 can use the baseline statistical values to determine anomaly thresholds for various parameters associated with network devices and groups of network devices. The threshold may set a lower bound and/or an upper bound for an operating characteristic. Analysis module 29 can also perform regression analysis on the time series data to determine relationships between operating characteristics, and trends in the values of operating characteristics.

In some aspects, a parameter may be based on a single operating characteristics, such as temperature, voltage, current draw, etc. In some aspects, the parameter may be based on a combination of operating characteristics of the network device. Analysis module 29 can assign a score based on the values of the combination of operating characteristics. Further, analysis module 29 can perform statistical analysis of the scores determined from the time series of historical data. For example, analysis module 29 can determine a score for each set of telemetry data that is collected for a network device over time. Analysis module 29 can then determine average values, standard deviations, quantiles, percentile thresholds, probability density function, etc. for the set of scores. Analysis module 29 can use the baseline statistical values to determine anomaly thresholds for the score with respect to the network device and with respect to groups of network devices. Analysis module 29 can also perform regression analysis on the time series of scores to determine relationships between operating characteristics and the score, and trends in the values of the score.

Anomaly detection module 31 can receive current telemetry data from data collection module 37 and compare the current telemetry data to thresholds in anomaly thresholds 43. If an instant (e.g., a most recently obtained) value of a parameter determined from operating characteristics and/or network performance data in the telemetry data for a network device does not satisfy an anomaly threshold for the operating characteristic, anomaly detection module 31 can determine that an anomaly event has occurred with respect to the network device. Anomaly detection module 31 can store anomaly event related data in telemetry database 39. The event related data can include a timestamp of when the event occurred and the type of event (overvoltage, undervoltage, overcurrent, undercurrent, overtemperature, etc.). Anomaly detection module 31 can generate an alert indicating that the anomaly event has occurred. In some aspects, in response to the alert, the anomaly detection unit can output details regarding the alert on a report of network anomalies. In some aspects, in response to the alert, an administrator 12 can request that anomaly detection module 31 generate user interface data 33 to present information regarding an alert event. Anomaly detection module 31 may utilize the timestamp for the alert event to obtain telemetry data for the network device from telemetry database 39. Anomaly detection module 31 may obtain telemetry data for the network device for a first time period occurring before the anomaly was detected, a second time period when the anomaly was detected, and a third time period after the anomaly was detected. The time periods may be set to a default value, or the administrator 12 can specify the time periods to use. Anomaly detection module 31 may present the baseline values for an operating characteristic in addition to the value that caused the anomaly to be detected. For example, anomaly detection module 31 can present the baseline value for the network device characteristics, or a group to which the device belongs, and can present the value that caused the anomaly to be detected. Additionally, anomaly detection unit can present network traffic data flowing through the network device at the time the anomaly occurred.

Anomaly detection module 31 may perform linear regression on the time series database to determine if an operating characteristic for a network device is trending away from the baseline value. If the rate of change exceeds a threshold value, anomaly detection module 31 can indicate an anomaly for the network device exhibiting the trend.

Anomaly detection module 31 may store anomaly data to memory 27 or, e.g., to an internal or external database and may output anomaly data to analysis system 17. Analysis system 17 receives telemetry information 202 from network management system 10, which may include anomaly data from anomaly detection module 31, performance indicators for elements of system 2, metrics data for network devices 14 of network 20, etc.

In accordance with the techniques of the disclosure, analysis system 17 implements end-to-end assurance for application workloads executed by GPUs 108 and distributed across a plurality of host computing devices, such as servers 110. The application workloads may include, e.g., a machine learning application workload or graphics rendering workload. In an example, analysis system 17 receives, from various elements of system 2 of FIG. 1, time series data comprising performance indicators for elements residing at a plurality of layers associated with the network system 2. The plurality of layers include, e.g., an application layer, a compute layer, and a network layer. The elements generating performance indicators may include, e.g., spine switches 102, rail switches 104, NICs 106 and GPUs 108 of servers 110, and servers 110 of FIG. 1. The performance indicators may include, e.g., application-level metrics, collective communication logs, GPU metrics, RoCEv2 telemetry, sFlow and flow telemetry data, and network telemetry data.

In some examples, the time series data comprises one or more of: application-specific metrics for the application workload of the application layer; one or more logs for a collective communication library (CCL) of the application layer; node level telemetry associated with the plurality of host computing devices of the compute layer; GPU telemetry associated with a plurality of GPUs of the plurality of host computing devices of the compute layer; Remote Direct Memory Access (RDMA) over Converged Ethernet (RoCE) or RoCEv2 information of the compute layer; or flow telemetry or network telemetry of the network layer.

In some examples, the time series data comprises the one or more logs for the CCL of the application layer, the one or more logs comprising at least one of: a number of bytes transferred for the application workload by each host of the plurality of host computing devices; or a number of operations performed for the application workload by each host of the plurality of host computing devices.

Analysis system 17 creates, based on the time series data, dependency graph 114 comprising nodes and edges. The nodes represent the elements residing at the plurality of layers, and the edges represent cross-layer relationships between pairs of the elements, each of the elements of each pair residing at different layers of the plurality of layers. Analysis system 17 creates dependency graph 114 on a per-application basis, in other words, analysis system 17 creates a different dependency graph 114 for each application instance or application type executed by system 2, each application instance associated with one or more application workloads executed by GPUs 108. For example, analysis system 17 maps, using the time series data, GPUs 108 of the compute layer to network devices 14 of the network layer, and creates dependency graph 114 based on the mapping.

In some examples, to create dependency graph 114, analysis system 17 creates, based on one or more logs for a collective communication library (CCL) of the time series data, a first edge between a first element residing at an application layer of the plurality of layers and a second element residing at a network layer of the plurality of layers. In this example, the first element comprises the application workload, and the second element comprising one of a NIC or a switch.

In some examples, to create dependency graph 114, analysis system 17 creates, based on GPU telemetry of the time series data, a first edge between a first element residing at an application layer of the plurality of layers and a second element residing at a compute layer of the plurality of layers. In this example, the first element comprises the application workload, and the second element comprises a GPU of a host computing device.

In some examples, to create dependency graph 114, analysis system 17 creates, based on flow-level telemetry of the time series data, a first edge between a first element residing at a compute layer of the plurality of layers and a second element residing at a network layer of the plurality of layers. In this example, the first element comprises a GPU of a host computing device, and the second element comprises one of a NIC or a switch.

Analysis system 17 may map application workloads 112 to GPUs 108; GPUs 108 of servers 110 to NICS 106 of servers 110; and NICS 106 of servers 110 to network devices 14 of network 20. Using these cross-layer mappings, analysis system 17 may generate dependency graph 114 to understand the cross-layer relationships of various elements to an application workload 112 experiencing an anomaly, so as to identify a root cause of the anomaly caused by an element in another layer outside of the application layer, as described below.

Analysis system 17 determines, based on the time series data, an anomaly in the performance of the application workload. For example, Analysis system 17 may determine the anomaly by performing anomaly detection, Service-level Expectations (SLE) monitoring, profiling of communications, etc. In some examples, analysis system 17 may determine the anomaly by comparing performance metrics measured from elements of system 2 with performance thresholds specified by, e.g., Service-level Agreements (SLAs). In some examples, analysis system 17 detects the anomaly in the performance of the application workload based at least in part on a rate of operations per iteration of the application workload.

Analysis system 17 determines, based on a mapping between the application workload and an element of the elements residing at the plurality of layers within dependency graph 114, an issue with the element as a root cause of the anomaly in the performance of the application workload. For example, analysis system 17 determines, based on a dependency of a workload 112 on an element of the network layer within the dependency graph 114, an issue with the element of the network layer as a root cause of the anomaly in the performance of the workload 112. As another example, analysis system 17 may determine, based on a mapping between the application workload and an element of the elements residing at the plurality of layers within dependency graph 114, that the anomaly in the performance of the application workload is due to an issue with an element of the elements residing at the plurality of layers, such as insufficient GPU resources of a GPU of a host computing device within a compute layer of the plurality of layers; a temperature of the GPU of the host computing device within the compute layer; insufficient resources of the host computing device within the compute layer; congestion control for an RDMA operation within a network layer of the plurality of layers; or network congestion of a network device within the network layer.

Analysis system 17 outputs, for display at a display device, an indication of the issue with the element of the elements residing at the plurality of layers as the root cause of the anomaly in the performance of the application workload. In some examples, analysis system 17 outputs, for display at a display device and based on the time series data and dependency graph 114, an indication of a health of the elements residing at the plurality of layers. In some examples, analysis system 17 outputs, for display at the display device and based on the time series data and dependency graph 114, a representation of an end-to-end path of communication between GPUs of two host computing devices within a compute layer of the plurality of layers that execute the application workload.

In some examples, analysis system 17 performs a remedial action for the root cause of the anomaly in the performance of the application workload. In some examples, to perform the remedial action, analysis system 17 configures an end-to-end path of communication between GPUs 108 of two servers 110 within a compute layer of the plurality of layers that execute the application workload. In some examples, to perform the remedial action, analysis system 17 configures a congestion control scheme of, e.g., one of spine switches 102 or rail switches 104 within a network layer of the plurality of layers that carries network traffic associated with the application workload.

In some examples, analysis system 17 determines a health of the elements residing at the plurality of layers based on the time series data and the dependency graph and outputs an indication of the health of the elements for display at the display device. In some examples, analysis system 17 determines an end-to-end path of communication between two GPUs of servers 110 within a compute layer of the plurality of layers that execute the application workload based on the time series data and the dependency graph, and outputs a representation of the end-to-end path for display at the display device.

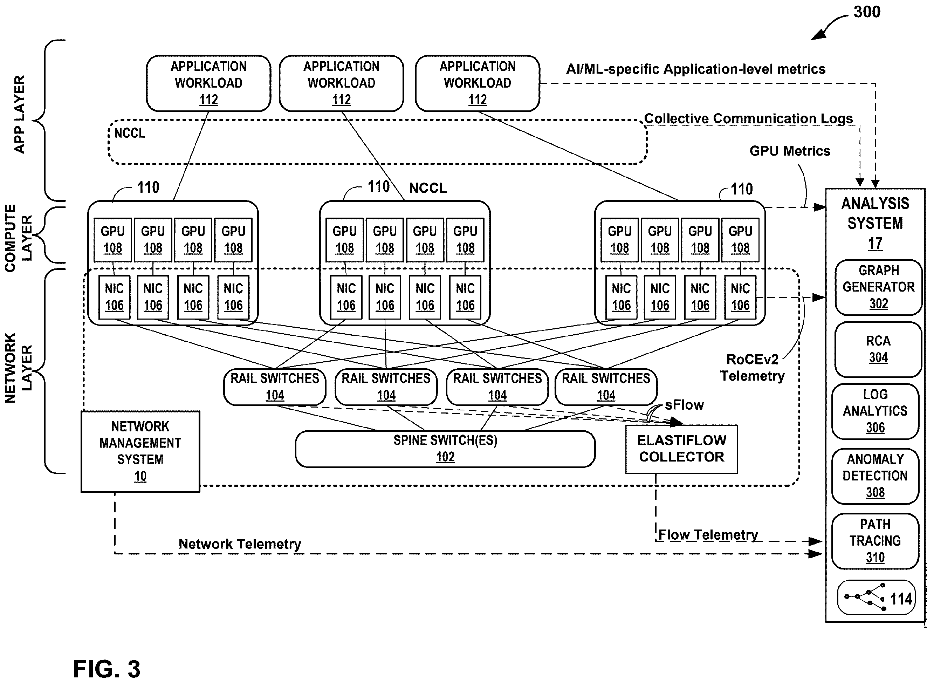

FIG. 3 is a block diagram illustrating an example system 300 in accordance with the techniques of the disclosure. In some examples, system 300 is an example of analysis system 17 of FIGS. 1 or 2.

Analysis system 17 provides end-to-end assurance for a plurality of network elements residing at a plurality of layers of system 2 of FIG. 1. Analysis system 17 receives performance indicators and/or performance metrics from elements across the plurality of layers of system 2. For example, for an application layer, analysis system 17 receives AI/ML-specific application-level metrics from application workloads 112 for an application and collective communication logs, such as NCCL logs, from servers 110. In some examples, application workloads 112 are workloads for an AI model and dataset application. For a compute layer, analysis system 17 receives GPU metrics for GPUs 108. For a network layer, analysis system 17 receives RoCEv2 telemetry for NICs 196, sFlow data and flow telemetry data for rail switches 104 and spine switches 102 (collected by an Elastiflow collector), and network telemetry provided by network management system 10.

Graph generator 302 builds, from the performance indicators and/or performance metrics from elements across the plurality of layers of system 2, dependency graph 114. Dependency graph 114 comprises nodes and edges. The nodes represent the elements residing at the plurality of layers, and the edges represent cross-layer relationships between pairs of the elements, each of the elements of each pair residing at different layers of the plurality of layers. Graph generator 302 creates dependency graph 114 on a per-application basis, in other words, graph generator 302 creates a different dependency graph 114 for each application instance or application type executed by system 2, each application instance associated with one or more application workloads executed by GPUs 108.

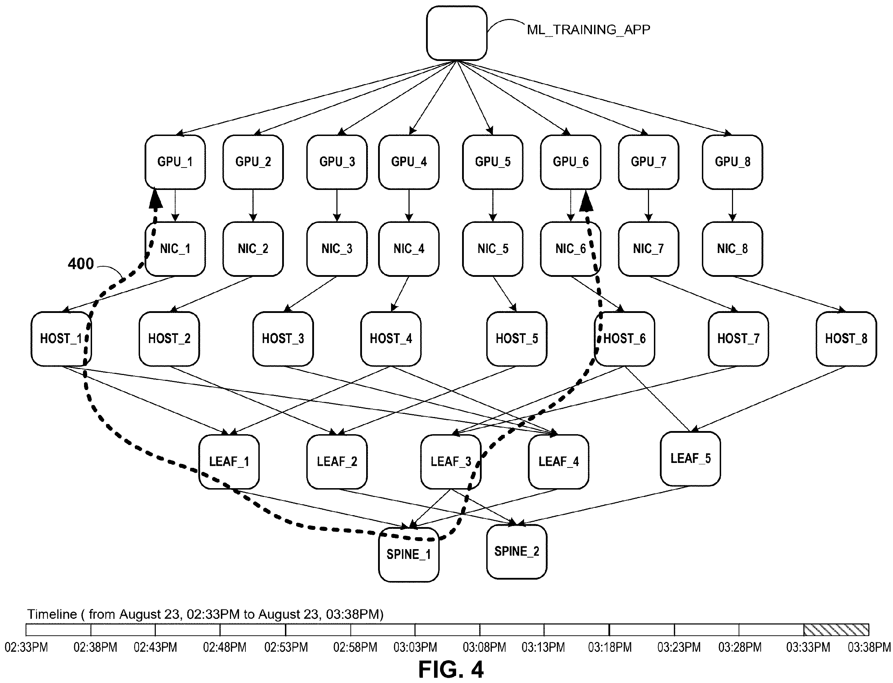

Log analytics 306 may parse the performance indicators and/or performance metrics to provide analytics for network system 2. Anomaly detection 308 may identify anomalies present within the performance indicators and/or performance metrics. RCA 304 provides tools for analyzing performance indicators and/or performance metrics to determine a root cause of anomalies identified within the performance indicators and/or performance metrics. Path tracing 310 provides visualization of communication and traffic flow paths between GPUs 108 of two servers 110 that traverse, from a first GPU of a first server 110, through spine switches 102 and rail switches 104 of network 20, to a second GPU of a second server 110. Additional description of the visualization of communication and traffic flow paths is set forth below with respect to FIG. 4.

### Additional Details of the E2E Framework proposed herein.

To obtain telemetry from the different mentioned sources, one needs to instrument and customize the libraries and frameworks involved. Additionally, one needs to bring forth a coordinated approach to leverage these collected metrics and serve the use-cases mentioned above. To tackle the first part of the problem, the techniques of the disclosure proposes changes in the Application layer. This layer houses two major types of frameworks that can be instrumented to provide application layer visibility - machine learning libraries (e.g. Pytorch, Tensorflow, etc.) and collective communication libraries (e.g. NCCL, OpenMPI, etc.).

Collective Communication Libraries (e.g. NCCL, MPI, Gloo, RCCL, etc.), which dictate collective communication patterns, traditionally have a limited debugging/logging functionality. Thus, to provide insights and visibility into communication patterns, modifications are required to this functionality. The following discussion describes the modifications made to a collective communication library (such as the Collective Communication Library available from Nvidia, Inc. (NCCL)) and how to leverage it. Different vendors might utilize different libraries, hence similar changes can also be carried out in other libraries too.

NCCL contains a limited logging functionality that aids debugging purposes. It has a subsystem level that allows it to log collective communication operations that are being performed. However, its lack of additional information (e.g. timestamp of operations, bytes transferred, GPUs involved in the operation, etc.) makes it difficult to serve any purpose beyond basic debugging. Three different subsystem levels are proposed: JCOLL, JRDMA and JRDMA _QP.

### JCOLL.

The techniques of the disclosure enhance the collective communication module by adding the multiple functionalities to gain visibility into this layer. A sample JCOLL logline comprises the following information:
- 845b5514,
   *Application ID*
- 0318,20:31:35.039720,
   Date, Time till microseconds granularity.
- ip-172-31-54-74:12210:12210,
   host name with PID and TID.
- [0] NCCL INFO [2],
   CUDA Dev with Debug type and debug subsystem if debug type is INFO
- AllReduce:
   Type of Collective.
- opCount 0,
   Operation count.
- sendbuff 0x7f6e00000000,
   NCCL's intermediate send buffer, allocated in GPU memory.
- recvbuff 0x7f6df8000000,
   NCCL's intermediate receive buffer, allocated in GPU memory.
- count 2,
   number of data blocks exchanged of the given datatype.
- datatype 7,
   Datatype of operation.
- op 0,
   Reduce operator with mapping of Sum=0, Prod=1, Min=2, Max=3.
- root 0,
   Peer for P2P operations.
- comm 0x56184a130b70,
   struct that holds all information of the collective, can be utilized to expose more information during logging.
- [nranks=1],
   Total number of ranks (can look at it as total number of GPUs).
- stream 0x56184993b370,
   CUDA stream struct.
- bytes 8,
   Total number of bytes exchanged.
- 0[0] -> (0[0].....),
   GPU to GPU communication in the format of GlobalRank[LocalRank]->List of GlobalRank[LocalRank].

The techniques of the disclosure utilize this new level of visibility to generate aggregate metrics pertaining to the number of bytes transferred and the number of operations carried for each host (along with the type of operations). This also helps in profiling communication patterns observed for different types of applications.

### JRDMA and JRDMA_QP.

To gain visibility into the transport layer and to map the underlying network layer with the application layer, the techniques of the disclosure propose two more subsystems: JRDMA and JRDMA_QP. The former provides a granular view of individual RDMA operations invoked by the collective communication framework while the latter is a coarser view of RDMA Queue Pairs utilized by the application. A sample JRDMA logline comprises the following information:
- 845b5514,
   Application ID.
- 0318,20:31:35.039720,
   Date, Time till microseconds granularity.
- ip-172-31-54-74:12210:12210,
   host name with PID and TID.
- [0] NCCL INFO [32768],
   CUDA Dev with Debug type and debug subsystem if debug type is INFO.
- IbPostFifo,
   Transport Function which generated the logline.
- qpIndex 18668,
   Queue Pair ID used for the given operation.
- op IBV_WR_RDMA_WRITE,
   RDMA Operation Name.
- remoteAddress 10.0.1.3,
   Remote address where the operation is performed.

In contrast, JRDMA_QP only logs lines when a new queue pair ID is observed and logs the following information:
- 845b5514,
   Application ID.
- 0318,20:31:35.039720,
   Date, Time till microseconds granularity.
- ip-172-31-54-74:12210:12210,
   host name with PID and TID.
- [0] NCCL INFO [65536],
   CUDA Dev with Debug type and debug subsystem if debug type is INFO.
- qpIndex 18669,
   Queue Pair ID generated.
- remoteAddress 10.0.1.3,
   Endpoint of the given QP.

### Application Level Telemetry.

Machine Learning applications have different types of metrics to analyze their performance. For example, language models utilize different types of loss to gauge model performance, vision models have accuracy as a benchmark, regression models have various types of error metrics (e.g. root mean square error, mean square error, etc.) and so on. Additionally, performance of all applications can be evaluated in a periodic basis by measuring the amount of time each iteration takes. This information can be collected via Pytorch by inserting measurement hooks for different metrics inside the application code. However, the techniques of the disclosure propose a custom application metric module (based off of the widely used Torchmetrics library) that just needs to be patched at the start and end of the application code to collect all custom defined metrics. An example is as follows:

```
       metrics = metrics _config.generate_metrics_object()
       #-----model code over here-----
       metrics.update(
               update_performance_metrics=True,
               update _iteration=True,
               mse_loss=loss,
               rmse_loss=torch.sqrt(loss),
               mae _loss=torch.nn.functional.l1_loss (outputs, targets)
       )
       metrics.compute()
```

### Visibility into the Compute and Network Layers.

To provide visibility into the compute layer, the techniques of the disclosure leverage an existing open-sourced tool, called DataCenter GPU Manager. This tool acts as an agent on individual nodes, collecting telemetry information pertaining to GPUs, and thus enabling observability into GPU performance. It does not need any separate instrumentation and can run as is on the nodes. An exporter is required to expose the collected metrics from the GPUs to an endpoint (e.g. a database such as Prometheus). The list of metrics is extensive; only a few, non-limiting examples are utilized for the E2E framework described herein are set forth below:
- DCGM_FI_DEV_MEMORY_TEMP: Memory temperature (in C).
- DCGM_FI_DEV_GPU_TEMP: GPU temperature (in C).
- DCGM_FI_DEV_GPU_UTIL: GPU utilization (in %).
- DCGM_FI_DEV_MEM_COPY_UTIL: Memory utilization (in %).
- DCGM_FI_DEV_FB_FREE: Frame buffer memory free (in MB).\

Additionally, for the network layer, the system collects flow level telemetry and utilizes the NIC and switch level system counters (e.g. number of congestion notification packets, number of tx/rx packets, switch buffer occupancy, etc.). The latter is used to observe traffic passing through the network and to detect bottlenecks caused due to congestion at different points of the network. The former helps identify elephant flows, a longstanding problem in distributed AI/ML workloads, which in turn can be useful in carrying out customized load balancing (e.g. dynamic load balancing). The flow level telemetry is collected by configuring SFlow (a flow telemetry tool) on the switch interfaces and by having a collector that streams out this data to a database, such as Opensearch. Finally, the system also exports node level metrics (e.g. CPU utilization, disk IO, etc.) that help understand the health of a particular node that houses these multiple GPUs and NICs. It could also be a key identifier of application performance bottlenecks.

### Example of Cross Layer Visibility.

In isolation, the collected metrics from all the mentioned sources can be used to identify bottlenecks in individual components. However, to provide a unified cross layer end-to-end view for individual applications, the techniques of the disclosure builds a dependency graph between the different layers and the different components of each layer. The system does this by first having a centralized data store, e.g., Prometheus, that collects timeseries data pertaining to the mentioned metrics. In an example implementation of the techniques of the disclosure, a system utilizes a setup comprising ten nodes (each equipped with a single RTX A6000 NVIDIA GPU, connected to Mellanox CX7 NICs) and two Juniper QFX Switches. The system maps the different layers by a combination of different labels per metric. The modified version of the collective communications framework described herein and the custom app-level module is crucial in pinning a particular application to the set of GPUs that are used to run this application. The system does this using the "GPU UUID" label. In a rail-optimized topology, GPUs have a 1-1 mapping with NICs, which is traditionally a static topology. From NIC level metrics, the system is able to map individual NICs to hosts, using the "hostname" label.

The source and destination fields in the flow level telemetry helps in constructing the path taken in the fabric. However, the flow telemetry does not contain any application fields to help determine which application the flow pertains to. It does however provide the system with RDMA specific fields, e.g. RDMA operation name, operation ID, Queue Pair ID, etc. The system maps the QP ID extracted from the flows to the NCCL logs, which provide the QP IDs associated with an individual application. This provides the system with the network view, hence helping in constructing the E2E path - starting from the application, to the compute (e.g. GPUs), to the network (e.g. NICs and switches).

### Serving Observability Use Cases.

As mentioned, utilizing the collected telemetry and log data from the different layers, the system populates existing and derived metrics. However, this is not enough to provide cross-layer assurance to the application. These in turn are used by a SaaS based framework to serve E2E cross-layer visibility features as described below.

Collective Communication Analysis: Analyzing the rate of collective communication operations, the system determines whether the applications are performing as expected. Carrying out a warmup period, the system measures the expected rate of operations (based on the granularity of individual operations) per iteration as a baseline, and utilizes that analysis to detect anomalies in subsequent iterations.

Anomaly Detection: In a live environment it becomes crucial to detect faults in the different components in the E2E path. For example, increase in iteration time beyond a certain threshold can be detected as a fault in the application layer. Similar observations can be made for different layers. The system described herein implements this feature to pinpoint faults at different layers and nodes.

Service Level Expectations (SLE): Utilizing anomaly detection, metrics are derived that populate the SLE feature and show the health of the layer across time. This is because anomaly detection and SLE are corelated features, where the SLE of a layer is unmet when anomalies are detected for that layer. In the experimentation section set forth below, the disclosure describes an example for this use-case.

Root Cause Analysis (RCA): The cross-layer analysis is used for finding out the root cause for observed anomalies in the different layers. This is traditionally confined to underlying layers such as the compute (e.g. GPUs) or network (e.g. NICs and Switches).

### Experimental Results.

An experimental setup implementing the techniques of the disclosure is demonstrated to analyze the communication patterns shown by different types of machine learning workloads, e.g. vision models, regression models, large language models (LLMs), recommendation models. In the following discussion, the communication patterns shown by two pretraining LLM workloads, OpenAI's GPT2 and Google's BERT, is described. In an example, a system utilizes NVIDIA's Megatron-LM framework to parallelize the workloads. GPT2 traditionally uses data parallelism, while BERT utilizes hybrid parallelism. The following experimental analysis uses these two techniques.

### GPT2 vs BERT.

Both GPT2 and BERT are LLM models and hence utilize the same type of collective communication operations - AllReduce, AllGather and Broadcast. The experiment runs the workloads for 5 iterations to observe the repetitive behavior across multiple iterations. The transfer size behavior repeats on a per iteration basis. However, despite being the same type of pretraining models (large language text-based models), the small size transfers for BERT are much larger in number compared to GPT2. Additionally, the large size transfers for GPT2 are much larger, e.g. 10x the size, (~700MiB) in comparison to BERT (~80MiB). Hence, a more granular approach is investigated by observing transfer size behavior of individual collective communication operations as described below.

For GPT2, the experimental results observed that the number of operations range from tens of Broadcasts to a few hundred AllReduces. The number of AllGathers per iteration is only 1, which occurs at the end of every operation. However, very different behavior is observed for BERT, with the number of AllReduces going up to more than a thousand, while the number of AllGathers and Broadcasts ranges from tens to hundreds of operations. However, the size of operations is much smaller in comparison to GPT2. This shows that despite being large language models, the pattern of communications differs greatly for different workloads. This in turn dictates the network traffic, thus making the understanding of these workloads crucial in providing assurance.

### Example of E2E Framework.

FIG. 4 is a block diagram illustrating an example traffic path 400 determined in accordance with the techniques of the disclosure. In the E2E framework described herein, the application is depicted with multiple layers and components in a live on-premises environment. The system described herein utilizes application specific metrics (identified by application ID) derived from enhanced collective communication logs proposed herein to find out which GPU is communicating with which GPU. The system maps these metrics to underlying layer metrics and flow level telemetry to carry out E2E path tracing (as shown by the highlighted arrow). The timeline of the workload shows that in the last 5-minute period, anomalies were detected at different nodes (as shown by the highlighted nodes). If one selects one of the highlighted nodes (e.g. GPU_6), one may see the detected anomaly and the layer level SLE. For example, a user interface may depict that anomalies were detected for the GPU temperature metric, which resulted in compute layer SLE being affected. In order to compute SLE values for every layer, the system utilizes a wide array of metrics and classifies them into categories. For example, the app layer has Model Throughput, and Iteration and Model Performance as categories to identify if expectations are met for the application. The GPU layer has Utilization, Bandwidth, and Temperature to monitor the GPU health. The NIC and Network Fabric Layers have the categories Connectivity, Bandwidth and Congestion to ensure that SLE in the network is met. Additionally, the NIC is the endpoint in the network fabric which performs packet reordering, hence an additional category - Reordering. Table 1 (set forth below) gives the detailed list of metrics which are used to compute the SLEs for categories of different layers. In addition, a description of each individual metric is provided below.

TABLE 1 describes SLE categories and metrics.

**TABLE 1: SLE Categories and Metrics**

| Layer Category SLE | Layer Category SLE | Layer Category SLE |
|---|---|---|
| App Layer | Iteration Performance | "iteration_completion_time" |
| | Iteration Rate | "iterations_per_second" |
| | Model Performance | "model_prediction_loss" |
| | Model Throughput | "samples_per_iteration" |
| GPU Layer | Utilization | "gpu_memory_utilization", |
| | | "gpu_utilization" |
| | Bandwidth | "gpu_nvlink_bandwidth" |
| | Temperature | "gpu_temperature" |
| NIC Layer | Bandwidth | "xmit_data_rate", |
| | | "rcv data rate" |
| | Congestion | "ecn_marked_roce_packets", |
| | | "cnp_sent", |
| | | "cnp_handled |
| | Reordering | "out of sequence" |
| | Connectivity | "local ack timeout_err", |
| | | "port_rev_errors", |
| | | "port_xmit_discards", "link_downed" |
| Fabric Layer | Bandwidth | "interface_counters_rx_bps", |
| | | "interface _counters_tx_bps" |
| | Congestion | "ecn_counters", "pfc_counters" |
| | Connectivity | "interface _counters_rx_error_pps", |
| | | "interface _counters_tx_error_pps" |

In some examples, the system carries out root cause analysis (RCA) to find the root cause in the underlying layers (e.g. compute or network layer) by utilizing the metrics from different layers. The RCA indicates the detected root cause, the location of the root cause, and suggests an action to address this issue. In this case, the root cause was congestion at the spine layer switch, analyzed by utilizing the given metrics, following which the suggested line of action is to carry out load balancing to relieve congestion from the given node.

The app layer provides collective communication analysis to monitor a rate of collective communication operations and application performance. Comparison across time periods in the timeline helps detect change in rate and degradation in application performance, which are the first indicators of issues in underlying layers.

For mapping the flows to individual application, the system utilizes a combination of flow header fields and the modified collective communication logs for RDMA Queue Pairs described above. In the given example, flow data collected by Apstra Flow collector provides the system with additional RDMA specific headers as given below:
"flow.src.host.name": "10.0.0.1"
"flow.dst.host.name": "10.0.1.1"
"infiniband.bth.dst_queue_pair": 12264,
"infiniband.bth.header_version": 0,
"infiniband.bth.opcode.id": 7,
"infiniband.bth.opcode.name":
   "RC RDMA Write Middle"

The collective communication logs provide the system with loglines comprising the information (as explained in previous sections) shown in Table 2 set forth below:

TABLE 2 describes RDMA specific log info from the App Layer.

**TABLE 2: RDMA Specific Log Info from App Layer**

| | |
|---|---|
| Application ID | 845b5514 |
| Date | 0917 |
| Time | 14:27:44.039720 |
| Queue Pair Index | 12264 |
| Remote Address | 10.0.1.1 |

The system utilizes the QP index collected from the application log to map the specific application to the flow using the "dst_queue_pair" field in flow headers. This helps in pinning individual flows to their corresponding applications. Additionally, the application ID field present in all log lines helps in mapping individual applications to other components in the E2E path, e.g. NICs and GPUs.

As described above, the techniques of the disclosure classifies multiple metrics into individual categories for measuring if Service Level Expectations have been met or not. An example list of metrics for individual layers, along with their description, is set forth below:

### App Layer

iteration_completion_time: The elapsed time for each training or finetuning iteration. Higher iteration times indicate that the application is getting trained at a slower rate, thus pointing to issues in underlying layers.

model_prediction loss: The difference between the predicted text and the actual text. Higher loss values mean degradation in model performance.

samples_per_iteration: Number of samples that are consumed per iteration. It is traditionally a static value but bottlenecks may result in samples being skipped, resulting in lower values of this metric.

iterations_per_second: The rate of iterations being executed in a second. Its corresponding anomalous metric is populated when the rate reduces, with a negative value e.g. the value by which it has reduced.

### GPU Layer.

gpu_memory_utilization: The GPU memory consumption when the job is running. Higher values may result in out-of-memory errors, leading the job to stop or slow down.

gpu_utilization: This represents the percentage of time during which one or more kernels were executing on the GPU. Ideally, GPU utilization should be close to 100% to reduce underutilization.

gpu_temperature: The temperature of the GPU in C. High temperature values may cause issues in the entire system, leading to jobs to slow down or even stop.

gpu_nvlink_bandwidth: This metric is applicable to systems with multiple GPUs, connected via NVLink. It provides the occupied NVLink bandwidth.

### NIC Layer.

xmit_data_rate, rcv_data_rate: The tx/rx throughput from the NIC viewpoint. This is used to understand if the NIC throughput is anomalous or not.

ecn_marked_roce_packets, cnp_sent, cnp_handled: These counters are used to determine if congestion has been detected by the NIC endpoints. ecn_marked_roce_packets is incremented when the receiver NIC is notified that congestion has been observed in the fabric. It then sends out a Congestion Notification Packet (CNP) and increments cnp_sent. The sender, on receiving the CNP, handles it and increments cnp_handled.

out_of_sequence: This metric signified if packet reordering is to be applied or not. It could be the cause of congestion and load balancing techniques.

local_ack_timeout_err, port_rev_errors, port_xmit_discards, link_downed: These metrics are incremented whenever there are link issues identified by the NIC endpoints. Timeouts result in local_ack_timeout_err being incremented. port_rcv_errors, port_xmit_discards are incremented when the tx/rx NICs respectively identify errors and discard packets. Finally, link_downed is incremented when the NIC is able to identify link issues.

### Fabric Layer.

interface_counters_rx_bps, interface_counters_tx_bps: The tx/rx throughput from the switch interface viewpoint. This is used to understand if the switch interface throughput is anomalous or not.

ecn_counters, pfc_counters: These counters are used to determine if congestion has been detected by the switches. ecn_counters is incremented when the switch marks outgoing packets with the ECN flag. The pfc_counters metric is incremented whenever pause frames are seen by the switch interface.

interface_counters_rx_error_pps, interface_counters_tx_error_pps: These metrics are incremented whenever there are link issues identified by the switch interfaces. They incremented when the ingress and egress interfaces respectively identify errors.

The techniques of the disclosure aim to provide end-to-end cross layer assurance for machine learning workloads, as well as other types of workloads in the datacenter setting. A system as proposed herein implements an architecture that breaks the end-to-end path of these workloads into three major layers: application, compute and network. Utilizing existing and newly instrumented telemetry sources in these different layers, a system as described herein builds a comprehensive set of metrics, which in turn is used to serve observability use cases such as anomaly detection, root cause analysis and dependency graph generation. An example implementation built as a proof-of-concept model operates in a cluster with multiple servers, GPUs, NICs and switches, and analyzes application behavior of AI/ML workloads.

FIG. 5 is a flowchart illustrating an example operation in accordance with techniques of this disclosure. FIG. 5 is described with respect to analysis system 17 and system 2 of FIGS. 1 and 2, for convenience.

Analysis system 17 implements end-to-end assurance for application workloads executed by GPUs 108 and distributed across a plurality of host computing devices, such as servers 110. The application workloads may include, e.g., a machine learning application workload or graphics rendering workload. In an example, analysis system 17 receives, from various elements of system 2, time series data comprising performance indicators for elements residing at a plurality of layers associated with the network system 2 (502). The plurality of layers include, e.g., an application layer, a compute layer, and a network layer. The elements generating performance indicators may include, e.g., spine switches 102, rail switches 104, NICs 106 and GPUs 108 of servers 110, and servers 110. The performance indicators may include, e.g., application-level metrics, collective communication logs, GPU metrics, RoCEv2 telemetry, sFlow and flow telemetry data, and network telemetry data.

Analysis system 17 creates, based on the time series data and a machine learning (ML) model trained with previous time series data, dependency graph 114 comprising nodes and edges (504). The nodes represent the elements residing at the plurality of layers, and the edges represent cross-layer relationships between pairs of the elements, each of the elements of each pair residing at different layers of the plurality of layers. Analysis system 17 creates dependency graph 114 on a per-application basis, in other words, analysis system 17 creates a different dependency graph 114 for each application instance or application type executed by system 2, each application instance associated with one or more application workloads executed by GPUs 108.

Analysis system 17 determines, based on the time series data, an anomaly in the performance of the application workload (506). Analysis system 17 determines, based on a mapping between the application workload and an element of the elements residing at the plurality of layers within dependency graph 114, an issue with the element as a root cause of the anomaly in the performance of the application workload (508). Analysis system 17 outputs, for display at a display device, an indication of the issue with the element of the elements residing at the plurality of layers as the root cause of the anomaly in the performance of the application workload (510).

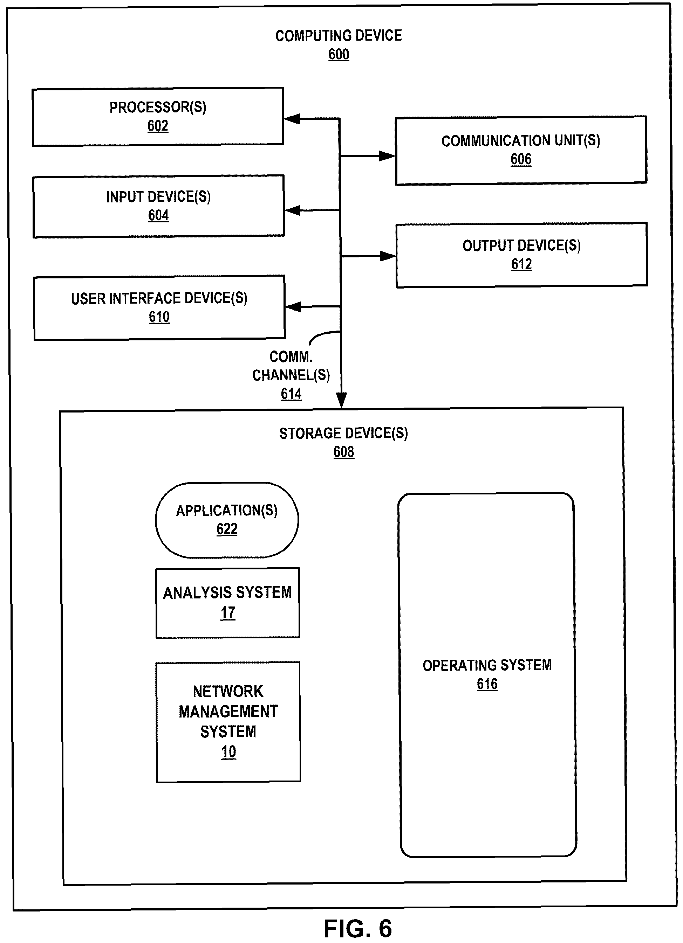

FIG. 6 is a block diagram illustrating an example computing device in accordance with the techniques of the disclosure. FIG. 6 may illustrate a particular example of a server or other computing device 600 that includes one or more processor(s) 602 for executing network management system 10 and/or analysis system 17 of FIG. 1. Other examples of computing device 600 may be used in other instances. Although shown in FIG. 6 as a stand-alone computing device 600 for purposes of example, a computing device may be any component or system that includes one or more processors or other suitable computing environment for executing software instructions and, for example, need not necessarily include one or more elements shown in FIG. 6 (e.g., communication units 606; and in some examples components such as storage device(s) 608 may not be co-located or in the same chassis as other components). Computing device 600 may be located and execute, for example, within any of servers 110 of FIG. 1, another interconnection facility, or at a branch office or cloud computing environment employed or used by a cloud exchange provider.

As shown in the specific example of FIG. 6, computing device 600 includes one or more processors 602, one or more input devices 604, one or more communication units 606, one or more output devices 612, one or more storage devices 608, and user interface (UI) device 610, and communication unit 606. Computing device 600, in one example, further includes one or more applications 622, network controller 24, and operating system 616 that are executable by computing device 600. Each of components 602, 604, 606, 608, 610, and 612 are coupled (physically, communicatively, and/or operatively) for inter-component communications. In some examples, communication channels 614 may include a system bus, a network connection, an inter-process communication data structure, or any other method for communicating data. As one example, components 602, 604, 606, 608, 610, and 612 may be coupled by one or more communication channels 614.

Processors 602, in one example, are configured to implement functionality and/or process instructions for execution within computing device 600. For example, processors 602 may be capable of processing instructions stored in storage device 608. Examples of processors 602 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 608 may be configured to store information within computing device 600 during operation. Storage device 608, in some examples, is described as a computer-readable storage medium. In some examples, storage device 608 is a temporary memory, meaning that a primary purpose of storage device 608 is not long-term storage. Storage device 608, in some examples, is described as a volatile memory, meaning that storage device 608 does not maintain stored contents when the computer is turned off. Examples of volatile memories include random access memories (RAM), dynamic random access memories (DRAM), static random access memories (SRAM), and other forms of volatile memories known in the art. In some examples, storage device 608 is used to store program instructions for execution by processors 602. Storage device 608, in one example, is used by software or applications running on computing device 600 to temporarily store information during program execution.

Storage devices 608, in some examples, also include one or more computer-readable storage media. Storage devices 608 may be configured to store larger amounts of information than volatile memory. Storage devices 608 may further be configured for long-term storage of information. In some examples, storage devices 608 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 600, in some examples, also includes one or more communication units 606. Computing device 600, in one example, utilizes communication units 606 to communicate with external devices via one or more networks, such as one or more wired/wireless/mobile networks. Communication units 606 may include a network interface card, such as an Ethernet card, an optical transceiver, a radio frequency transceiver, or any other type of device that can send and receive information. Other examples of such network interfaces may include 3G and WiFi radios. In some examples, computing device 600 uses communication unit 606 to communicate with an external device.

Computing device 600, in one example, also includes one or more user interface devices 610. User interface devices 610, in some examples, are configured to receive input from a user through tactile, audio, or video feedback. Examples of user interface devices(s) 610 include a presence-sensitive display, a mouse, a keyboard, a voice responsive system, video camera, microphone or any other type of device for detecting a command from a user. In some examples, a presence-sensitive display includes a touch-sensitive screen.

One or more output devices 612 may also be included in computing device 600. Output device 612, in some examples, is configured to provide output to a user using tactile, audio, or video stimuli. Output device 612, in one example, includes a presence-sensitive display, a sound card, a video graphics adapter card, or any other type of device for converting a signal into an appropriate form understandable to humans or machines. Additional examples of output device 612 include a speaker, a cathode ray tube (CRT) monitor, a liquid crystal display (LCD), or any other type of device that can generate intelligible output to a user.

Computing device 600 may include operating system 616. Operating system 616, in some examples, controls the operation of components of computing device 600. For example, operating system 616, in one example, facilitates the communication of one or more applications 622, network controller 24, and VPC connectivity selector 38 with processors 602, communication unit 606, storage device 608, input device 604, user interface devices 610, and output device 612.

Application(s) 622, analysis system 17, and network management system 10 may also include program instructions and/or data that are executable by computing device 600. Application 622, analysis system 17, and network management system 10 may include instructions for causing computing device to perform one or more of the operations and actions described in the present disclosure with respect to analysis system 17 and network management system 10.

Thus, from one perspective techniques are disclosed for end-to-end assurance of application workloads. For example, a computing system receive time series data comprising performance indicators for elements of layers of a system having host computing devices executing application workloads. The computing system creates, based on mapping, using the time series data, Graphics Processing Units (GPUs) of a compute layer to network devices of a network layer, a dependency graph representing cross-layer relationships between elements of different layers of the layers. The computing system determines an anomaly in the performance of one of the application workloads. The computing system determines, based on a dependency within the dependency graph of the application workload on an element of the network layer, an issue with the element as a root cause of the anomaly in the performance of the workload, and performs a remedial action for the issue with the element of the network layer.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable storage medium, containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer readable media.

Further examples of feature combinations taught by the present disclosure are set out in the following numbered clauses:
1. A computing system comprising:
   storage media; and
   processing circuitry in communication with the storage media, the processing circuitry configured to:
      receive time series data comprising performance indicators for elements of a plurality of layers of a system having host computing devices that execute workloads for an application, the time series data generated by the elements;
      create, based on mapping, using the time series data, Graphics Processing Units (GPUs) of a compute layer of the plurality of layers to network devices of a network layer of the plurality of layers, a dependency graph comprising nodes and edges, the nodes representing the elements of the plurality of layers, and the edges representing cross-layer relationships between pairs of the elements, each of the elements of each pair being of different layers of the plurality of layers;
      determine, based on the time series data, an anomaly in the performance of a workload of the workloads for the application;
      determine, based on a dependency of the workload on an element of the network layer within the dependency graph, an issue with the element of the network layer as a root cause of the anomaly in the performance of the workload; and
      perform a remedial action for the issue with the element of the network layer as a root cause of the anomaly in the performance of the workload.
2. The computing system of clause 1, wherein the plurality of layers include an application layer, the compute layer, and the network layer.
3. The computing system of clause 2, wherein the time series data comprises one or more of:
   application-specific metrics for the workloads for the application of the application layer;
   one or more logs for a collective communication library (CCL) of the application layer;
   node level telemetry associated with the plurality of host computing devices of the compute layer;
   Graphics Processing Unit (GPU) telemetry associated with a plurality of GPUs of the plurality of host computing devices of the compute layer;
   Remote Direct Memory Access (RDMA) over Converged Ethernet (RoCE) information of the compute layer; or
   flow telemetry or network telemetry of the network layer.
4. The computing system of clause 3, wherein the time series data comprises the one or more logs for the CCL of the application layer, the one or more logs comprising at least one of:
   a number of bytes transferred for the workloads by each host computing device of the host computing devices; or
   a number of operations performed for the workloads by each host computing device of the host computing devices.
5. The computing system of any preceding clause, wherein, to create the dependency graph, the processing circuitry is further configured to create, based on one or more logs for a collective communication library (CCL) of the time series data, a first edge between the workload of an application layer of the plurality of layers and one of a Network Interface Controller (NIC) or a switch of the network layer.
6. The computing system of any preceding clause, wherein, to create the dependency graph, the processing circuitry is further configured to create, based on GPU telemetry of the time series data, a first edge between the workload of an application layer of the plurality of layers and a GPU of the GPUs of the compute layer.
7. The computing system of any preceding clause, wherein, to create the dependency graph, the processing circuitry is further configured to create, based on flow-level telemetry of the time series data, a first edge between a GPU of the GPUs of the compute layer and one of a Network Interface Controller (NIC) or a switch of the network layer.
8. The computing system of any preceding clause, wherein the issue with the element of the elements residing at the plurality of layers comprises at least one of:
   insufficient Graphics Processing Unit (GPU) resources of a GPU of the GPUs of the compute layer;
   a temperature of the GPU of the GPUs of the compute layer;
   insufficient resources of a host computing device of host computing devices of the compute layer;
   congestion control for a Remote Direct Memory Access (RDMA) operation of the network layer; or
   network congestion of a network device of the network layer.
9. The computing system of any preceding clause, wherein the processing circuitry is configured to detect the anomaly in the performance of the workload based at least in part on a rate of operations per iteration of the workload.
10. The computing system of any preceding clause, wherein the processing circuitry is further configured to output, based on the time series data and the dependency graph, an indication of a health of the elements residing at the plurality of layers.
11. The computing system of any preceding clause, wherein the processing circuitry is further configured to output, based on the time series data and the dependency graph, a representation of an end-to-end path of communication between GPUs of two host computing devices of the host computing devices of the compute layer that execute the workload.
12. The computing system of any preceding clause, wherein the processing circuitry is further configured to:
   perform a remedial action for the root cause of the anomaly in the performance of the workload, wherein the remedial action comprises one of:
   configuring an end-to-end path of communication between GPUs of two host computing devices of the host computing devices of the compute layer that execute the workload; or
   configuring a congestion control scheme of a network device within the network layer that carries network traffic associated with the workload.
13. The computing system of any preceding clause, wherein the workloads comprises one of:
   machine learning workloads; or
   graphics rendering workloads.
14. A method comprising:
   receiving, by processing circuitry of a computing system, time series data comprising performance indicators for elements of a plurality of layers of a system having host computing devices that execute workloads for an application, the time series data generated by the elements;
   create, based on mapping, using the time series data, Graphics Processing Units (GPUs) of a compute layer of the plurality of layers to network devices of a network layer of the plurality of layers, a dependency graph comprising nodes and edges, the nodes representing the elements of the plurality of layers, and the edges representing cross-layer relationships between pairs of the elements, each of the elements of each pair being of different layers of the plurality of layers;
   determining, by the processing circuitry and based on the time series data, an anomaly in the performance of a workload of the workloads for the application;
   determining, by the processing circuitry and based on a dependency of the workload on an element of the network layer within the dependency graph, an issue with the element of the network layer as a root cause of the anomaly in the performance of the workload; and
   performing, by the processing circuitry, a remedial action for the issue with the element of the network layer as a root cause of the anomaly in the performance of the workload.
15. The method of clause 14, wherein the plurality of layers include an application layer, the compute layer, and the network layer.
16. The method of clause 14 or clause 15, wherein creating the dependency graph further comprises creating, based on one or more logs for a collective communication library (CCL) of the time series data, a first edge between the workload of an application layer of the plurality of layers and one of a Network Interface Controller (NIC) or a switch of the network layer.
17. The method of any of clauses 14 to 16, wherein creating the dependency graph further comprises creating, based on GPU telemetry of the time series data, a first edge between the workload of an application layer of the plurality of layers and a GPU of the GPUs of the compute layer.
18. The method of any of clauses 14 to 17, wherein creating the dependency graph further comprises creating, based on flow-level telemetry of the time series data, a first edge between a GPU of the GPUs of the compute layer and one of a Network Interface Controller (NIC) or a switch of the network layer.
19. The method of any of clauses 14 to 18, further comprising performing, by the processing circuitry, a remedial action for the root cause of the anomaly in the performance of the workload, wherein the remedial action comprises one of:
   configuring an end-to-end path of communication between GPUs of two host computing devices of the host computing devices of the compute layer that execute the workload; or
   configuring a congestion control scheme of a network device within the network layer that carries network traffic associated with the workload.
20. Computer-readable media encoding instructions that, when executed, are configured to cause processing circuitry to:
   receive time series data comprising performance indicators for elements of a plurality of layers of a system having host computing devices that execute workloads for an application, the time series data generated by the elements;
   create, based on mapping, using the time series data, Graphics Processing Units (GPUs) of a compute layer of the plurality of layers to network devices of a network layer of the plurality of layers, a dependency graph comprising nodes and edges, the nodes representing the elements of the plurality of layers, and the edges representing cross-layer relationships between pairs of the elements, each of the elements of each pair being of different layers of the plurality of layers;
   determine, based on the time series data, an anomaly in the performance of a workload of the workloads for the application;
   determine, based on a dependency of the workload on an element of the network layer within the dependency graph, an issue with the element of the network layer as a root cause of the anomaly in the performance of the workload; and
   perform a remedial action for the issue with the element of the network layer as a root cause of the anomaly in the performance of the workload.

## Claims

1. A computing system comprising:
storage media; and
processing circuitry in communication with the storage media, the processing circuitry configured to:
receive time series data comprising performance indicators for elements of a plurality of layers of a system having host computing devices that execute workloads for an application, the time series data generated by the elements;
create, based on mapping, using the time series data, Graphics Processing Units, GPUs, of a compute layer of the plurality of layers to network devices of a network layer of the plurality of layers, a dependency graph comprising nodes and edges, the nodes representing the elements of the plurality of layers, and the edges representing cross-layer relationships between pairs of the elements, each of the elements of each pair being of different layers of the plurality of layers;
determine, based on the time series data, an anomaly in the performance of a workload of the workloads for the application;
determine, based on a dependency of the workload on an element of the network layer within the dependency graph, an issue with the element of the network layer as a root cause of the anomaly in the performance of the workload; and
perform a remedial action for the issue with the element of the network layer as a root cause of the anomaly in the performance of the workload.

2. The computing system of claim 1, wherein the plurality of layers include an application layer, the compute layer, and the network layer.

3. The computing system of claim 2, wherein the time series data comprises one or more of:
application-specific metrics for the workloads for the application of the application layer;
one or more logs for a collective communication library, CCL, of the application layer;
node level telemetry associated with the plurality of host computing devices of the compute layer;
Graphics Processing Unit, GPU, telemetry associated with a plurality of GPUs of the plurality of host computing devices of the compute layer;
Remote Direct Memory Access, RDMA, over Converged Ethernet, RoCE, information of the compute layer; or
flow telemetry or network telemetry of the network layer.

4. The computing system of claim 3, wherein the time series data comprises the one or more logs for the CCL of the application layer, the one or more logs comprising at least one of:
a number of bytes transferred for the workloads by each host computing device of the host computing devices; or
a number of operations performed for the workloads by each host computing device of the host computing devices.

5. The computing system of any of claims 1-4, wherein, to create the dependency graph, the processing circuitry is further configured to create, based on one or more logs for a collective communication library, CCL, of the time series data, a first edge between the workload of an application layer of the plurality of layers and one of a Network Interface Controller, NIC, or a switch of the network layer.

6. The computing system of any of claims 1-5, wherein, to create the dependency graph, the processing circuitry is further configured to create, based on GPU telemetry of the time series data, a first edge between the workload of an application layer of the plurality of layers and a GPU of the GPUs of the compute layer.

7. The computing system of any of claims 1-6, wherein, to create the dependency graph, the processing circuitry is further configured to create, based on flow-level telemetry of the time series data, a first edge between a GPU of the GPUs of the compute layer and one of a Network Interface Controller, NIC, or a switch of the network layer.

8. The computing system of any of claims 1-7, wherein the issue with the element of the elements residing at the plurality of layers comprises at least one of:
insufficient Graphics Processing Unit, GPU, resources of a GPU of the GPUs of the compute layer;
a temperature of the GPU of the GPUs of the compute layer;
insufficient resources of a host computing device of host computing devices of the compute layer;
congestion control for a Remote Direct Memory Access, RDMA, operation of the network layer; or
network congestion of a network device of the network layer.

9. The computing system of any of claims 1-8, wherein the processing circuitry is configured to detect the anomaly in the performance of the workload based at least in part on a rate of operations per iteration of the workload.

10. The computing system of any of claims 1-9, wherein the processing circuitry is further configured to output, based on the time series data and the dependency graph, a representation of an end-to-end path of communication between GPUs of two host computing devices of the host computing devices of the compute layer that execute the workload.

11. The computing system of any of claims 1-10, wherein the processing circuitry is further configured to:
perform a remedial action for the root cause of the anomaly in the performance of the workload, wherein the remedial action comprises one of:
configuring an end-to-end path of communication between GPUs of two host computing devices of the host computing devices of the compute layer that execute the workload; or
configuring a congestion control scheme of a network device within the network layer that carries network traffic associated with the workload.

12. The computing system of any of claims 1-11, wherein the workloads comprises one of:
machine learning workloads; or
graphics rendering workloads.

13. A method comprising:
receiving, by processing circuitry of a computing system, time series data comprising performance indicators for elements of a plurality of layers of a system having host computing devices that execute workloads for an application, the time series data generated by the elements;
create, based on mapping, using the time series data, Graphics Processing Units, GPUs, of a compute layer of the plurality of layers to network devices of a network layer of the plurality of layers, a dependency graph comprising nodes and edges, the nodes representing the elements of the plurality of layers, and the edges representing cross-layer relationships between pairs of the elements, each of the elements of each pair being of different layers of the plurality of layers;
determining, by the processing circuitry and based on the time series data, an anomaly in the performance of a workload of the workloads for the application;
determining, by the processing circuitry and based on a dependency of the workload on an element of the network layer within the dependency graph, an issue with the element of the network layer as a root cause of the anomaly in the performance of the workload; and
performing, by the processing circuitry, a remedial action for the issue with the element of the network layer as a root cause of the anomaly in the performance of the workload.

14. The method of claim 13, further comprising steps corresponding to the functionality recited in any of claims 2-12.

15. Computer-readable media encoding instructions that, when executed by one or more programmable processors, cause the one or more programmable processors to become configured to carry out the method of any of claims 13-14.
